# EUROPEAN PATENT APPLICATION

(11) **EP 4 782 521 A1**
(43) Date of publication of application: **29.07.2026**
(21) Application number: 24867159.6
(22) Date of filing: 12.08.2024
(51) Int. Cl.: C09K 19/44, G02F 1/00

(54) **LIQUID CRYSTAL COMPOSITION AND LIQUID CRYSTAL DISPLAY DEVICE**

(30) Priority: 20.09.2023 CN 202311224207
(71) Applicant: Jiangsu Hecheng Display Technology Co., Ltd., Nanjing, Jiangsu 210000 (CN)
(72) Inventor: YAO, Lifang, Nanjing, Jiangsu 210000 (CN); DING, Wenquan, Nanjing, Jiangsu 210000 (CN); HE, Di, Nanjing, Jiangsu 210000 (CN); WANG, Panpan, Nanjing, Jiangsu 210000 (CN); DAI, Huijuan, Nanjing, Jiangsu 210000 (CN); YAN, Kang, Nanjing, Jiangsu 210000 (CN)
(74) Representative: Serjeants LLP
(86) International application number: PCT/CN2024/111426
(87) International publication number: WO 2025/060742

(57) **Abstract**

The present invention provides a liquid crystal composition and a liquid crystal display device. The liquid crystal composition of the present invention comprises at least one compound of general formula I, at least one compound of general formula II, and at least one compound of general formula III. In the liquid crystal composition of the present invention, by means of mutual compounding of the specific structures and contents of the compounds, the liquid crystal composition has a larger phase width to meet display requirements at lower temperatures while having an appropriate perpendicular dielectric constant, an appropriate dielectric anisotropy, a relatively large optical anisotropy, a relatively small rotational viscosity, a shorter gray-to-gray response time, a relatively good low-temperature storage stability, and a relatively good flicker value, so that the liquid crystal display device including the same has a relatively small threshold voltage, a relatively large response speed, a relatively high contrast ratio, and a relatively wide operating temperature range.

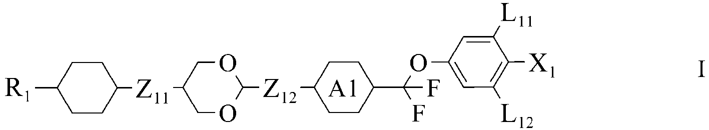

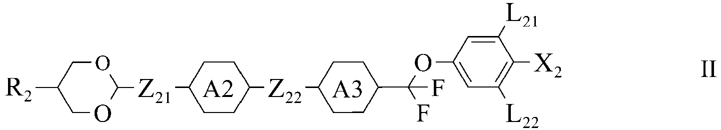

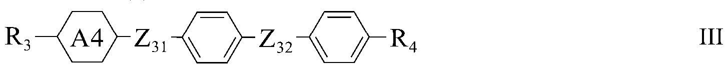

## Description

### Technical Field

The present invention belongs to the technical field of liquid crystal materials, and specifically relates to a liquid crystal composition and a liquid crystal display device thereof.

### Background Arts

Liquid crystal materials are mixtures of organic rod-shaped small molecular compounds that have both the fluidity and the anisotropy of a crystal at a certain temperature. Liquid crystal display devices work by utilizing the optical anisotropy and dielectric anisotropy of the liquid crystal material itself.

Based on the displaying modes, liquid crystal display elements can be classified into the following types: twist nematic (TN) mode, super twisted nematic (STN) mode, in-plane switching (IPS) mode, fringe field switching (FFS) mode and vertical alignment (VA) mode. In-plane switching display mode has become the ideal display mode for TFT-LCD (thin-film transistor liquid crystal display) due to its excellent viewing angle characteristics, dynamic clarity, and color reproduction. Furthermore, in-plane switching (IPS) display mode is also the ideal option in fields of aerospace, health care, and automotive use.

Thin-film transistor liquid crystal display (TFT-LCD) screens hold a pivotal position in the display industry. As TFT-LCD applications expand, performance demands thereto continue to rise. Not only the physical parameters of liquid crystal materials (such as dielectric anisotropy, optical anisotropy, elastic constants and the like) are required to align with device requirements, but also these materials are required to exhibit high stability, including thermal stability and chemical stability. Currently, the storage temperature range of typical liquid crystal materials is -40°C to 100°C. However, for display screens with specialized applications requirements (for example, automotive use), the operating temperature range is currently required to be -40°C to 90°C, and the storage temperature range is expended to be -50°C to 110°C. Simultaneously, high-definition display image quality demands larger response speeds (the lower the rotational viscosity γ1 the better, a lower rotational viscosity indicates a larger response speed) and smaller flicker. During the usage of the LCD panel, horizontal stripe flicker occurs due to polarity switching of the voltage common (Vcom) signal, which is commonly referred as the flicker phenomenon within the field. Wherein, the flicker value directly reflects the qualitative reliability of the LCD panel. Typically, the larger the flicker value, the easier the image sticking (IS) generates on the LCD panel, otherwise, the image sticking is reduced/prevented. Severe flicker phenomenon leads to an increased image sticking in LCD panels, which degrades display quality and causes physiological discomfort to viewers (such as eye fatigue, vision deterioration, dizziness and the like). Therefore, flicker value tests are required during the TFT-LCD production and the flicker value shall be controlled within a predetermined range.

Compared to liquid crystal displays used in televisions, computers, and mobile phones, other than meeting the above performance requirements, vehicle-mounted LCDs also need to have wider operating temperature range and superior reliability performance to adapt regional and seasonal temperature variations while maintaining normal display functionality under prolonged outdoor exposure to sunlight and high temperatures. This requires that liquid crystal compositions for vehicle-mounted displays possess not only appropriate retardations and appropriate threshold voltages, but also shorter gray-to-gray (GTG) response times at low temperatures, relatively good flicker values, relatively wide operating temperature ranges and excellent reliability performances.

Modulation of liquid crystal composition formulations involves in adjusting multiple performance parameters of the liquid crystal composition simultaneously. It is impossible to adjust one performance parameter of the liquid crystal composition without affecting the value of other performance parameters. Sometimes, adding a specific liquid crystal monomer to adjust one performance parameter of the liquid crystal composition may benefit one or more performances and may hinder improvements of other performance parameters. Therefore, how to develop liquid crystal compositions that can fully or partially solve the above problems remains an urgent issue to be solved in the field.

### Summary of the Invention

In view of the disadvantages in the prior art, the object of the present invention is to provide a liquid crystal composition and a liquid crystal display device. While having an appropriate perpendicular dielectric constant, an appropriate dielectric anisotropy, a relatively large optical anisotropy, a relatively small rotational viscosity, a shorter gray-to-gray response time, a relatively good low-temperature storage stability, and a relatively good flicker value, the liquid crystal composition also has a larger phase width to meet display requirements at lower temperatures, so that the liquid crystal display device including the same has a relatively small threshold voltage, a relatively large response speed, a relatively high contrast ratio, and a relatively wide operating temperature range.

To realize this object, the present invention adopts the following technical solutions:
For the first aspect, the present invention provides a liquid crystal composition comprising:
at least one compound of general formula I: 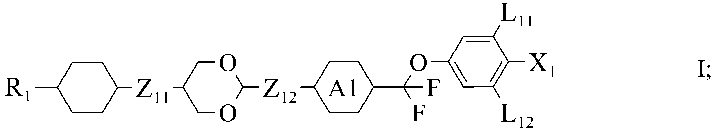
at least one compound of general formula II: 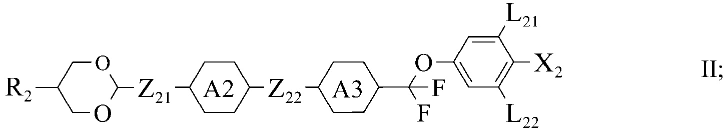 and
at least one compound of general formula III: 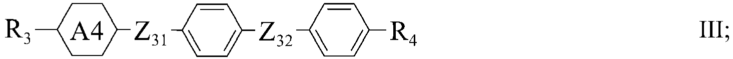
wherein, R₁ and R₂ each independently represents C₁₋₁₂ (for example, C₁, C₂, C₃, C₄, C₅, C₆, C₇, C₈, C₉, C₁₀, C₁₁ or C₁₂) linear alkyl, C₃₋₁₂ (for example, C₃, C₄, C₅, C₆, C₇, C₈, C₉, C₁₀, C₁₁ or C₁₂) branched alkyl, 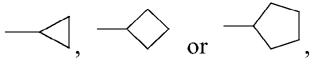 wherein one or at least two nonadjacent -CH₂- in the C₁₋₁₂ linear alkyl, C₃₋₁₂ branched alkyl can each be independently replaced by -CH=CH-, -C≡C-, -O-, -CO-, -CO-O- or -O-CO-, and one or more -H in C₁₋₁₂ linear alkyl, C₃₋₁₂ branched alkyl, 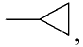 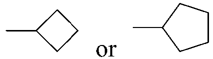 can each be independently substituted by -F or -Cl;
R₃ and R₄ each independently represents C₁₋₁₂ (for example, C₁, C₂, C₃, C₄, C₅, C₆, C₇, C₈, C₉, C₁₀, C₁₁ or C₁₂) linear alkyl, C₂₋₁₂ (for example, C₂, C₃, C₄, C₅, C₆, C₇, C₈, C₉, C₁₀, C₁₁ or C₁₂) linear alkenyl, C₁₋₁₂ (for example, C₁, C₂, C₃, C₄, C₅, C₆, C₇, C₈, C₉, C₁₀, C₁₁ or C₁₂) linear alkoxy, of R₃ and R₄ is C₂₋₁₂ linear alkenyl; 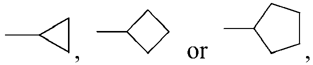 and at least one
ring 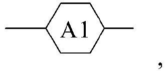 ring 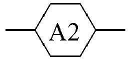 and ring 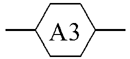 each independently represents 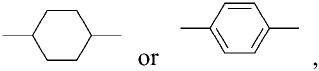 wherein one or more -CH₂-in 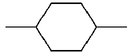 can be replaced by -O-, one or at most two single bonds in the rings can be replaced by double bond, and wherein one or more -H in 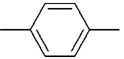 can be substituted by halogen;
ring 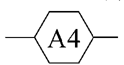 represents 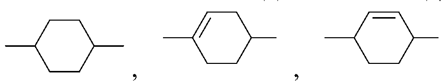 or 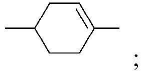
Z₁₁, Z₁₂, Z₂₁, Z₂₂, Z₃₁ and Z₃₂ each independently represents single bond, -CH₂CH₂-, -CF₂CF₂-, -CO-O-, -O-CO-, -O-CO-O-, -C≡C-, -CH=CH-, -CF=CF-, -CH₂O- or -OCH₂-;
L₁₁, L₁₂, L₂₁ and L₂₂ each independently represents -H, halogen, or C₁₋₃ alkyl; and
X₁ and X₂ each independently represents halogen, C₁₋₅ halogenated alkyl, C₁₋₅ halogenated alkoxy, C₂₋₅ halogenated alkenyl, or C₂₋₅ halogenated alkenoxy.

In some embodiments of the present invention, preferably, ring 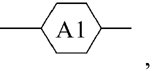 ring 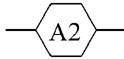 and ring 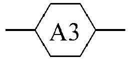 each independently represents 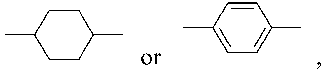 wherein one or more -H in 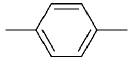 can be substituted by halogen; further preferably, ring 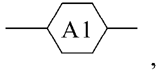 ring 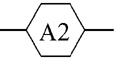 and ring 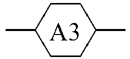 each independently represents

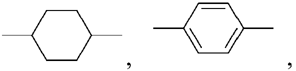

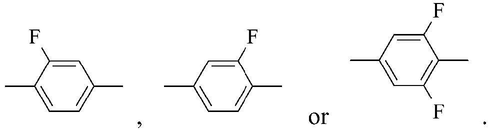

By means of mutual compounding of the specific structures and contents of the compound of general formula I, the compound of general formula II and the compound of general formula III in the liquid crystal composition provided by the present invention, the liquid crystal composition has a larger phase width to meet display requirements at lower temperatures while having an appropriate perpendicular dielectric constant, an appropriate dielectric anisotropy, a relatively large optical anisotropy, a relatively small rotational viscosity, a shorter gray-to-gray response time, a relatively good low-temperature storage stability, and a relatively good flicker value.

In the present invention, "can each be independently replaced by ..." means that it can (be able to) be replaced or not, that is, both of being replaced and not being replaced belong to the protection scope of the present invention; "can each be independently substituted by ..." has the same meaning; meanwhile, the position to be "replaced" or "substituted" is arbitrary.

In the present invention, the short straight line on one or both sides of the group represents a connecting bond, rather than a methyl (for example, the short straight line on the left side of 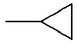 and the short lines on both sides of

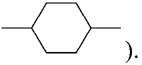

In the present invention, said halogen comprises halogen elements such as fluorine, chlorine, bromine, iodine or the like; the same meaning applies hereinafter when the same expression is involved.

In the present invention, said "halogenated" means at least one hydrogen in the group is substituted by halogen (fluorine, chlorine, bromine, iodine or the like).

In some embodiments of the present invention, the compound of general formula I is selected from a group consisting of the following compounds: 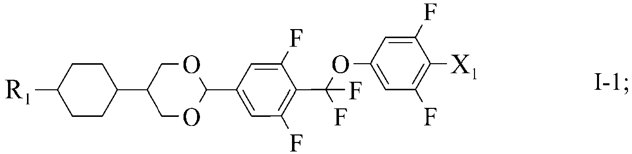 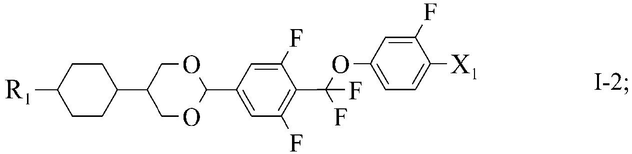 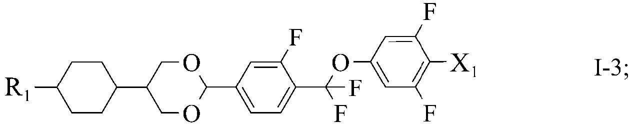 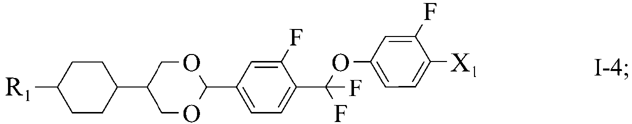 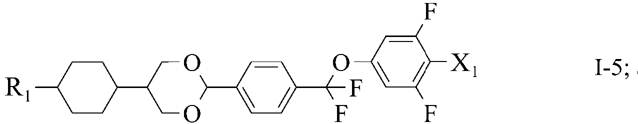 and

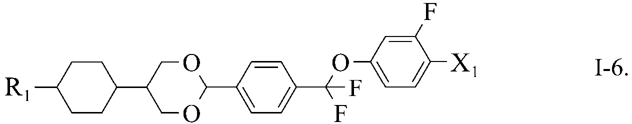

In some embodiments of the present invention, in order to achieve a liquid crystal composition having an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures, the compound of general formula I comprises at least one compound of general formula I-1.

In some embodiments of the present invention, it is preferred to adjust the content of the compound of general formula I, so that the liquid crystal composition of the present invention can have an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures.

In some embodiments of the present invention, the compound of general formula I provides 0.1%-20% by weight of the liquid crystal composition (including all of the numerical values or sub-ranges therebetween), for example, 0.1%, 1%, 3.5%, 4%, 5%, 5.5%, 6%, 6.5%, 7%, 8%, 8.5%, 10%, 11.5%, 12%, 14%, 16%, 18%, 20%, or a range between any two of these numerical values, preferably, the compound of general formula I provides 1%-10% by weight of the liquid crystal composition.

In some embodiments of the present invention, the compound of general formula I-1 provides 4%-9% by weight of the liquid crystal composition.

In some embodiments of the present invention, the compound of general formula II is selected from a group consisting of the following compounds: 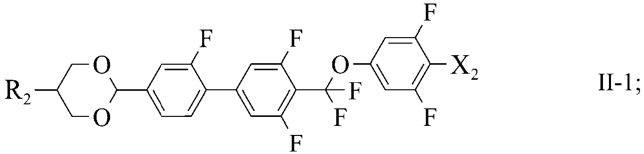 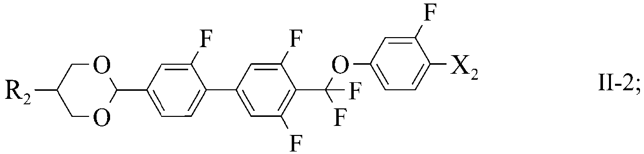 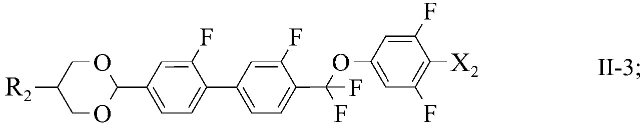 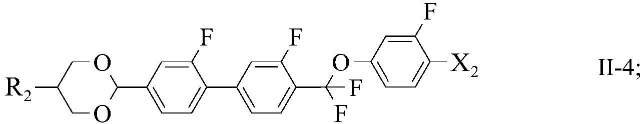 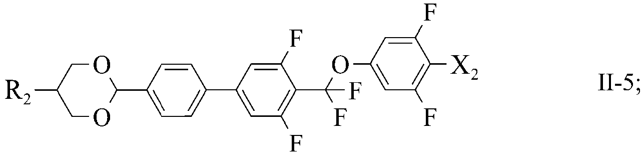 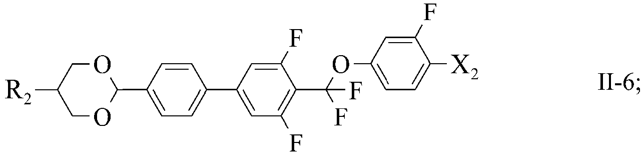 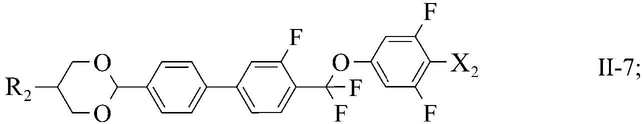 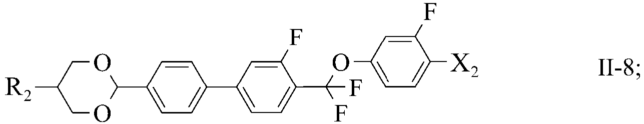 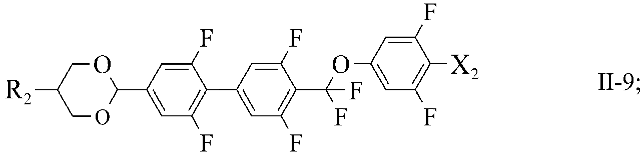 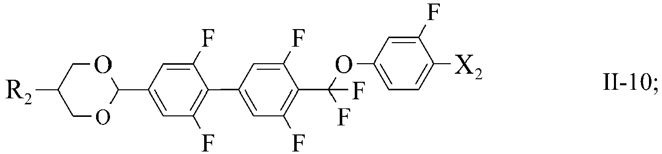 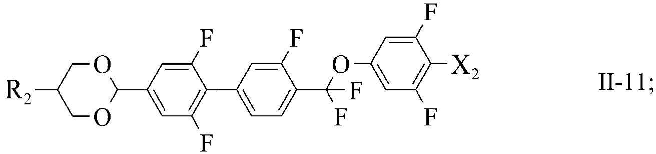 and

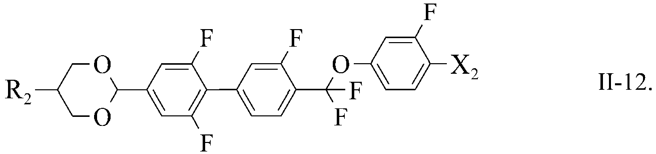

In some embodiments of the present invention, in order to achieve a liquid crystal composition having an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures, the compound of general formula II comprises anyone or a combination of at least two of the compound of general formula II-1 and the compound of general formula II-5.

In some embodiments of the present invention, it is preferred to adjust the content of the compound of general formula II, so that the liquid crystal composition of the present invention can have an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures.

In some embodiments of the present invention, the compound of general formula II provides 0.1%-20% by weight of the liquid crystal composition (including all of the numerical values or sub-ranges therebetween), for example, 0.1%, 1%, 3%, 4%, 5%, 5.5%, 6%, 8%, 10%, 12%, 14%, 16%, 18%, 20%, or a range between any two of these numerical values, preferably, the compound of general formula II provides 1%-10% by weight of the liquid crystal composition.

In some embodiments of the present invention, anyone or a combination of at least two of the compound of general formula II-1 and the compound of general formula II-5 provides 1%-5% by weight of the liquid crystal composition.

In some embodiments of the present invention, the compound of general formula III is selected from a group consisting of the following compounds: 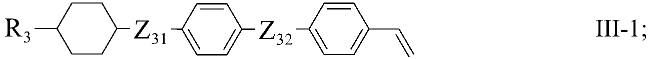 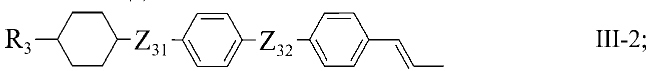 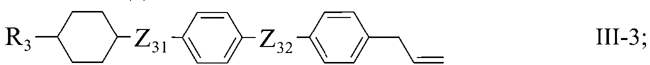 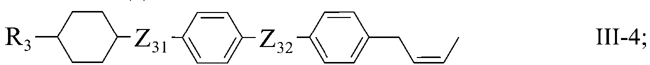 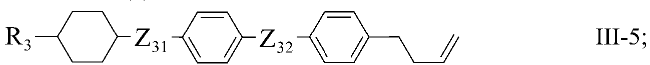 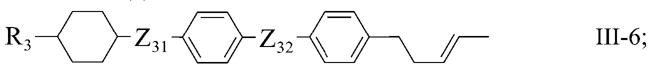 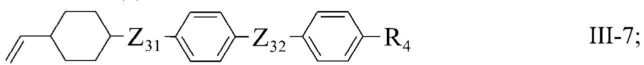 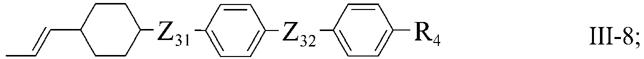 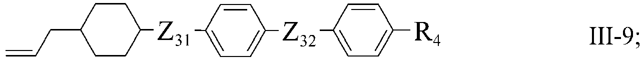 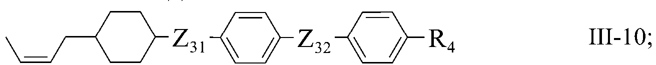 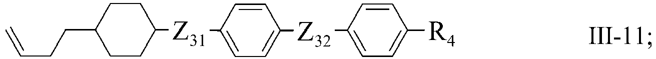 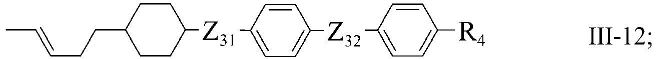 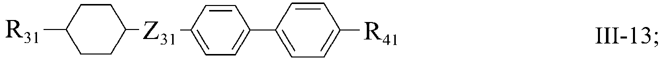 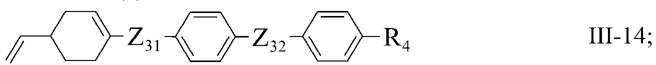 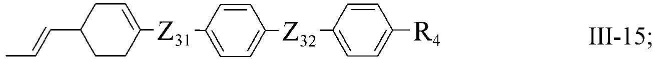 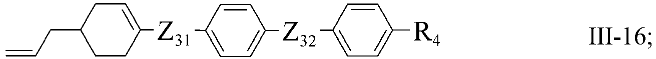 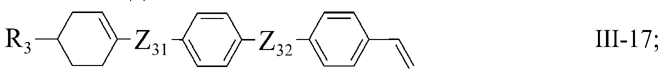 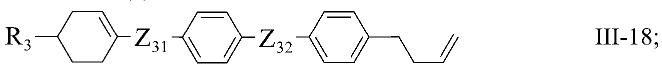 and 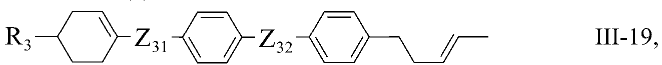
wherein, R₃ and R₄ each independently represents C₁₋₁₂ linear alkyl, C₃₋₁₂ branched alkyl, or C₁₋₉ linear alkoxy;
R₃₁ and R₄₁ each independently represents C₂₋₈ linear alkenyl;
Z₃₁ and Z₃₂ each independently represents single bond, -CH₂CH₂- or -CH=CH-.

In some embodiments of the present invention, further preferably, R₃₁ and R₄₁ each independently represents C₂₋₅ linear alkenyl.

In some embodiments of the present invention, in order to achieve a liquid crystal composition having an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures, the compound of general formula III comprises anyone or a combination of at least two of the compound of general formula III-5, the compound of general formula III-6, the compound of general formula III-7, the compound of general formula III-8, the compound of general formula III-13 and the compound of general formula III-14.

In some embodiments of the present invention, the compound of general formula III is selected from a group consisting of the following compounds: 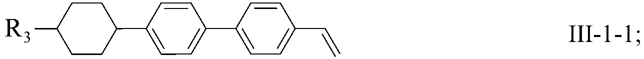 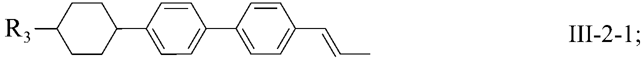 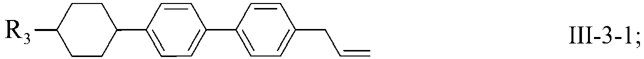 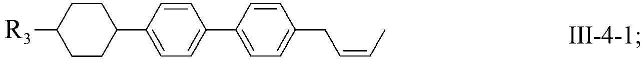 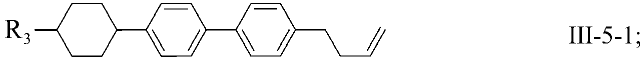 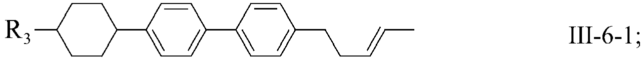 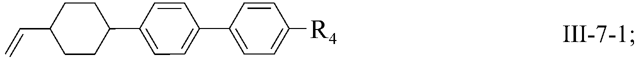 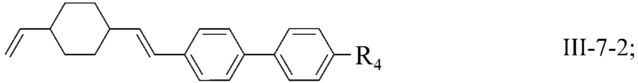 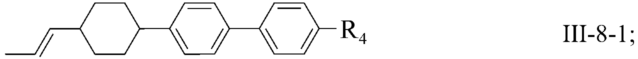 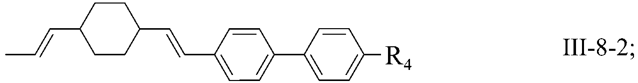 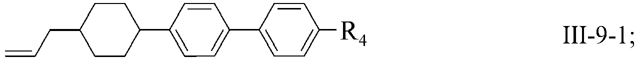 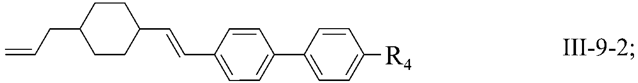 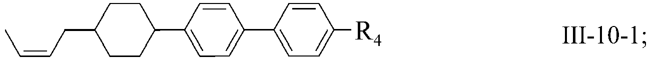 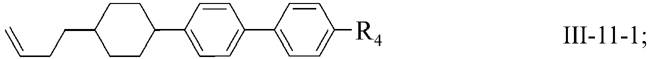 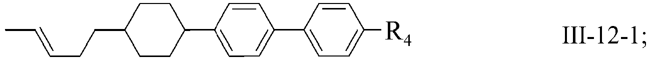 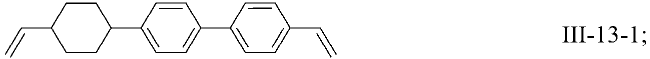 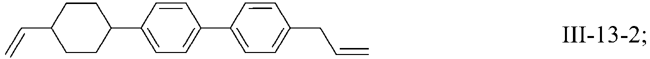 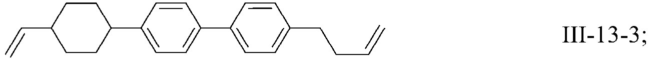 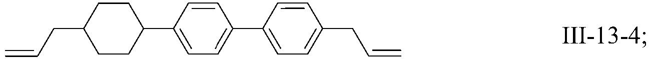 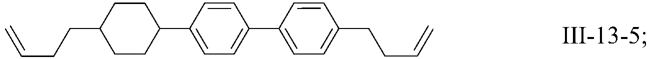 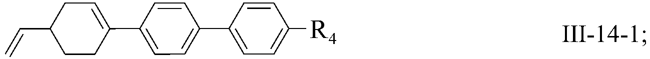 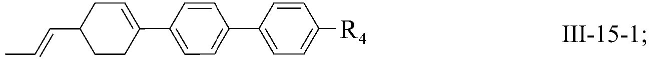 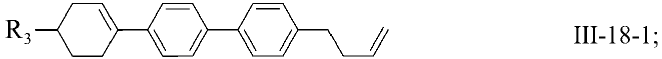 and

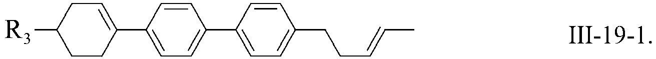

In some embodiments of the present invention, it is preferred to adjust the content of the compound of general formula III, so that the liquid crystal composition of the present invention can have an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures.

In some embodiments of the present invention, the compound of general formula III provides 0.1%-30% by weight of the liquid crystal composition (including all of the numerical values or sub-ranges therebetween), for example, 0.1%, 1%, 4%, 6%, 8%, 10%, 12%, 14%, 16%, 18%, 20%, 22%, 24%, 26%, 28%, 30%, or a range between any two of these numerical values, preferably, the compound of general formula III provides 1%-20% by weight of the liquid crystal composition.

In some embodiments of the present invention, anyone or a combination of at least two of the compound of general formula III-5, the compound of general formula III-6, the compound of general formula III-7, the compound of general formula III-8, the compound of general formula III-13 and the compound of general formula III-14 provides 5%-12% by weight of the liquid crystal composition (including all of the numerical values or sub-ranges therebetween); for example, 5%, 6%, 7%, 8%, 9%, 10%, 11%, 12%, or a range between any two of these numerical values.

In some embodiments of the present invention, anyone or a combination of at least two of the compound of general formula III-5-1, the compound of general formula III-6-1, the compound of general formula III-7-1, the compound of general formula III-8-1, the compound of general formula III-13-3 and the compound of general formula III-14-1 provides 5%-12% by weight of the liquid crystal composition (including all of the numerical values or sub-ranges therebetween); for example, 5%, 6%, 7%, 8%, 9%, 10%, 11%, 12%, or a range between any two of these numerical values.

In some embodiments of the present invention, the liquid crystal composition of the present invention further comprises at least one compound of general formula M: 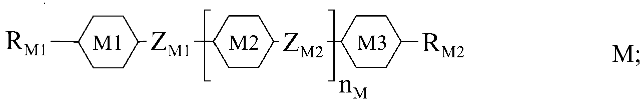
wherein, R_{M1} and R_{M2} each independently represents C₁₋₁₂ (for example, C₁, C₂, C₃, C₄, C₅, C₆, C₇, C₈, C₉, C₁₀, C₁₁ or C₁₂) linear alkyl, C₂₋₁₂ (for example, C₂, C₃, C₄, C₅, C₆, C₇, C₈, C₉, C₁₀, C₁₁ or C₁₂) linear alkenyl, C₁₋₁₂ (for example, C₁, C₂, C₃, C₄, C₅, C₆, C₇, C₈, C₉, C₁₀, C₁₁ or C₁₂) linear alkoxy, 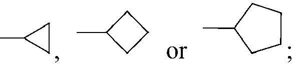
ring 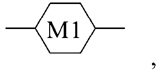 ring 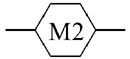 and ring 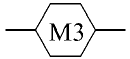 each independently represents 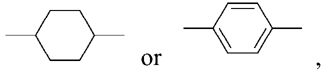 wherein one or more -CH₂-in 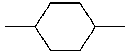 can be replaced by -O-, one or at most two single bonds in the rings can be replaced by double bond, and wherein at most one -H in 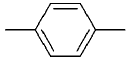 can be substituted by halogen;
Z_{M1} and Z_{M2} each independently represents single bond, -CO-O-, -O-CO-, -CH₂O-, -OCH₂-, -CH₂CH₂-, -O-CO-O-, -C≡C-, -CH=CH- or -(CH₂)₄-; n_{M} represents 0, 1 or 2, wherein when n_{M} represents 2, ring 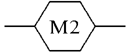 can be the same or different, and Z_{M2} can be the same or different; wherein when n_{M} represents 1, at least one of ring 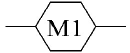 and ring 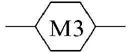 is 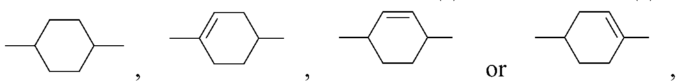 and when ring 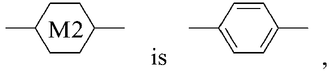 R_{M1} and R_{M2} each independently represents C₁₋₁₂ linear alkyl, C₁₋₁₂ linear alkoxy,

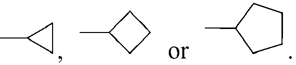

In some embodiments of the present invention, preferably, R_{M1} and R_{M2} each independently represents C₁₋₁₀ linear alkyl, C₁₋₉ linear alkoxy, or C₂₋₁₀ linear alkenyl; further preferably, R_{M1} and R_{M2} each independently represents C₁₋₈ linear alkyl, C₁₋₇ linear alkoxy, or C₂₋₈ linear alkenyl.

In some embodiments of the present invention, it is preferred that R_{M1} and R_{M2} each independently represents C₂₋₈ linear alkenyl; it is further preferred that R_{M1} and R_{M2} each independently represents C₂₋₅ linear alkenyl.

In some embodiments of the present invention, it is preferred that one of R_{M1} and R_{M2} is C₂₋₅ linear alkenyl and the other is C₁₋₅ linear alkyl.

In some embodiments of the present invention, when the reliability is emphasized, it is preferred that both of R_{M1} and R_{M2} are alkyl; when reducing the volatilization of the compound reliability is emphasized, it is preferred that both of R_{M1} and R_{M2} are alkoxy; and when decreasing the viscosity is emphasized, it is preferred that at least one of R_{M1} and R_{M2} is alkenyl.

In some embodiments of the present invention, the compound of general formula M is selected from a group consisting of the following compounds: 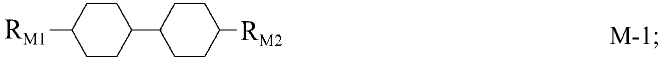 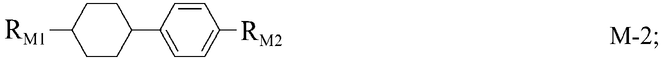 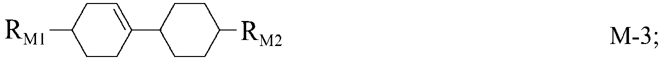 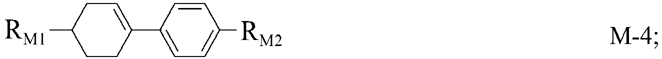 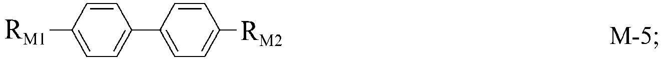 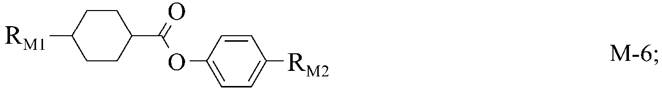 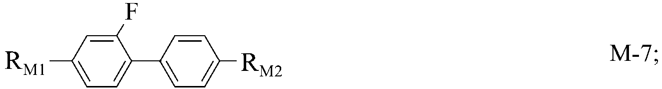 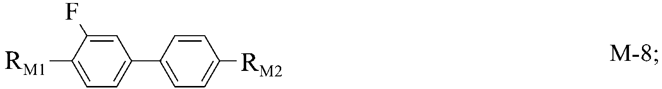 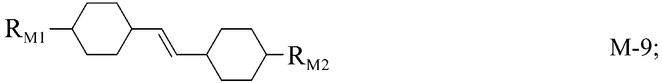 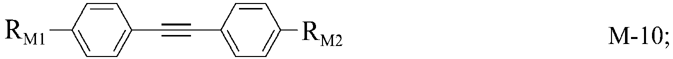 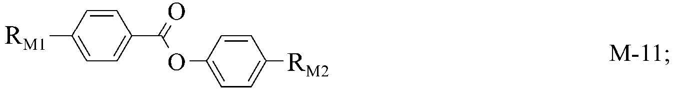 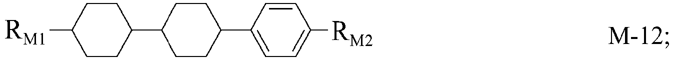 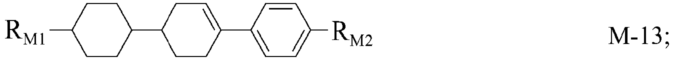 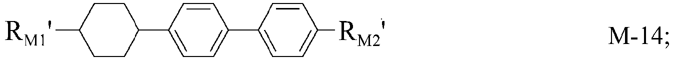 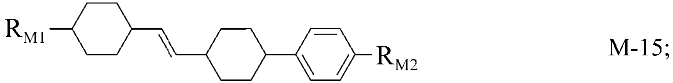 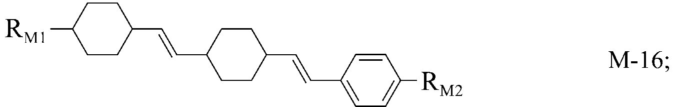 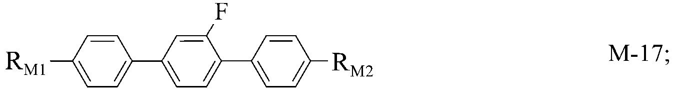 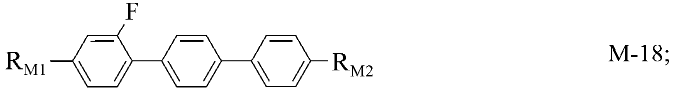 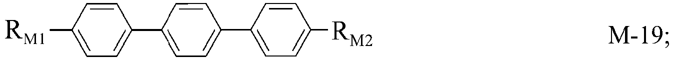 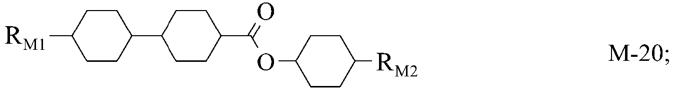 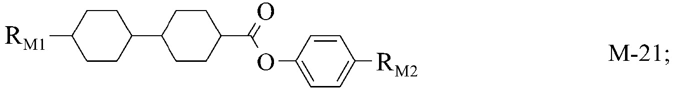 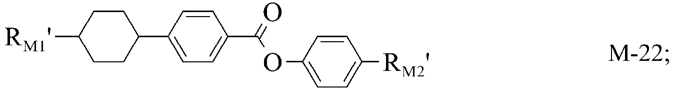 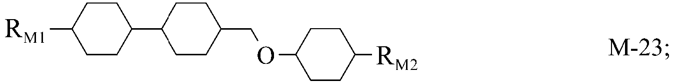 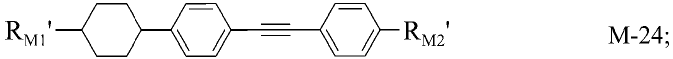 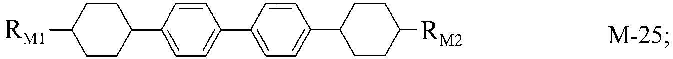 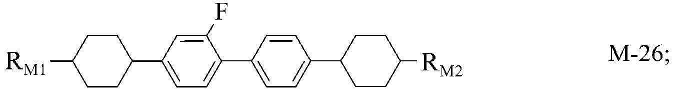 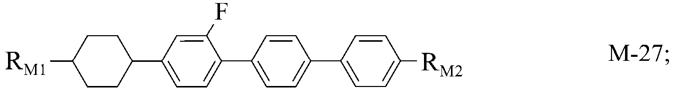 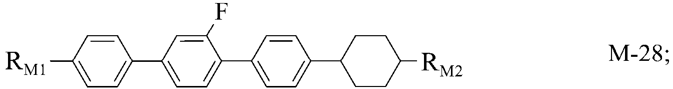 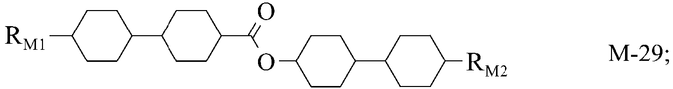 and 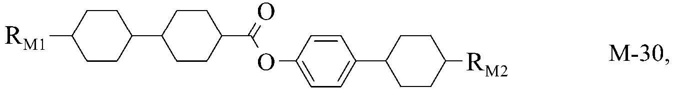 wherein, R_{M1}' and R_{M21}' each independently represents C₁₋₁₂ linear alkyl, C₁₋₁₂ linear alkoxy,

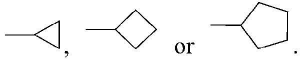

In some embodiments of the present invention, in order to achieve a liquid crystal composition having an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures, the compound of general formula M comprises anyone or a combination of at least two of the compound of general formula M-1, the compound of general formula M-3, the compound of general formula M-5, the compound of general formula M-9, the compound of general formula M-12, the compound of general formula M-13, the compound of general formula M-15, the compound of general formula M-17 and the compound of general formula M-25.

In some embodiments of the present invention, the compound of general formula M-1 is selected from a group consisting of the following compounds: 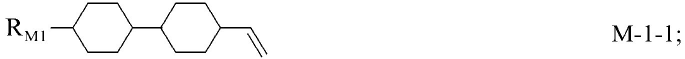 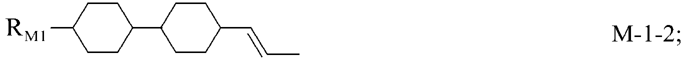 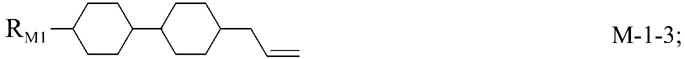 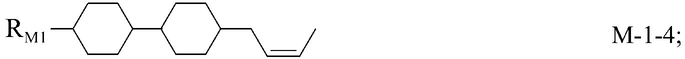 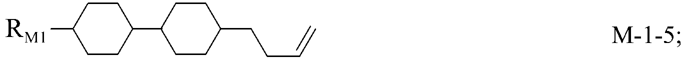 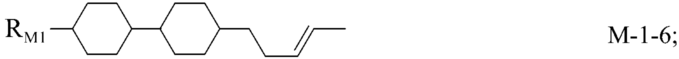 and 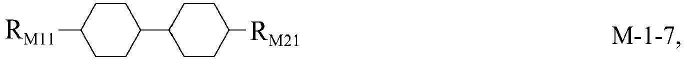
wherein, R_{M1} represents C₁₋₁₂ linear alkyl, C₃₋₁₂ branched alkyl, or C₁₋₉ linear alkoxy;
R_{M11} and R_{M21} each independently represents C₂₋₈ linear alkenyl.

In some embodiments of the present invention, the compound of general formula M-1 is selected from a group consisting of the following compounds: 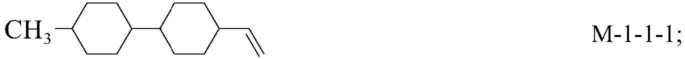 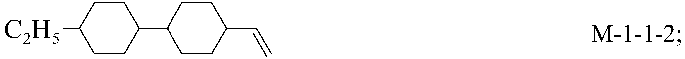 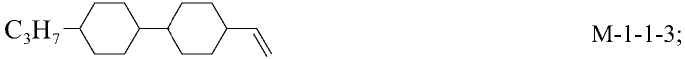 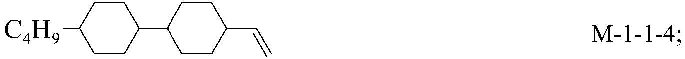 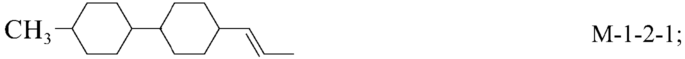 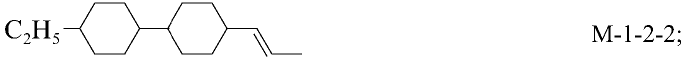 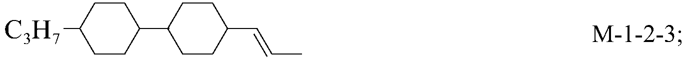 and

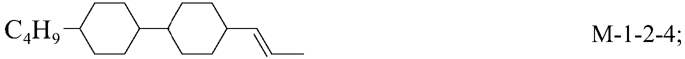

In some embodiments of the present invention, the compound of general formula M-12 is selected from a group consisting of the following compounds: 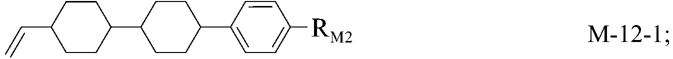 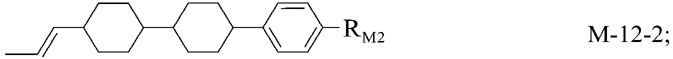 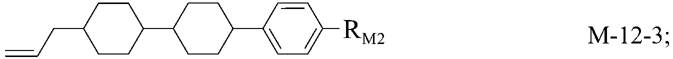 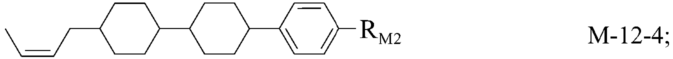 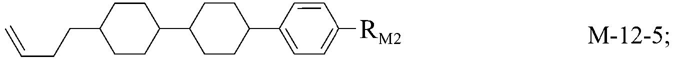 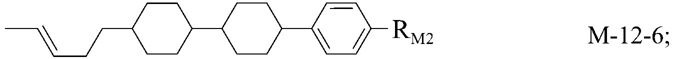 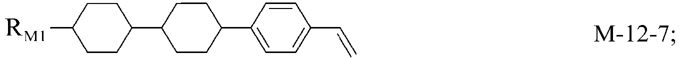 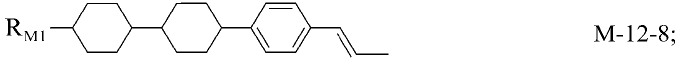 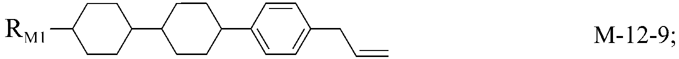 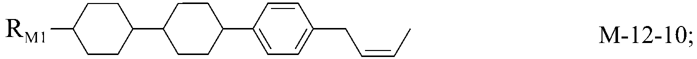 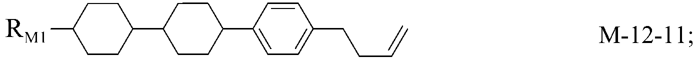 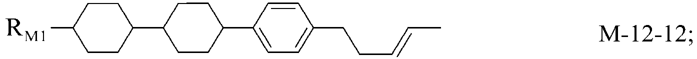 and 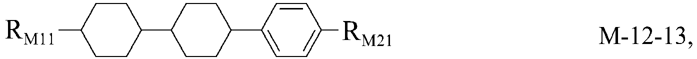
wherein R_{M1} and R_{M2} each independently represents C₁₋₁₂ linear alkyl, C₃₋₁₂ branched alkyl, or C₁₋₉ linear alkoxy;
R_{M11} and R_{M21} each independently represents C₂₋₈ linear alkenyl.

In some embodiments of the present invention, the compound of general formula M-12 is selected from a group consisting of the following compounds: 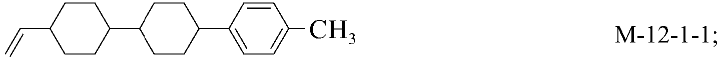 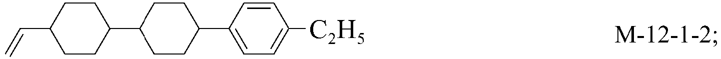 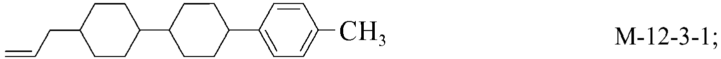 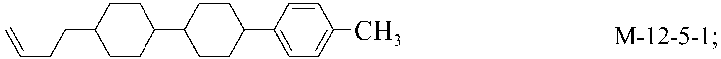 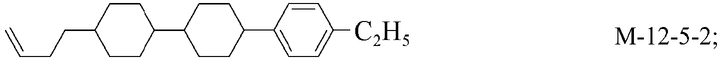 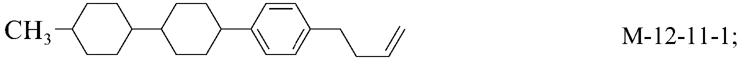 and

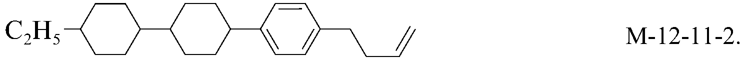

In some embodiments of the present invention, the compound of general formula M-17 is selected from a group consisting of the following compounds: 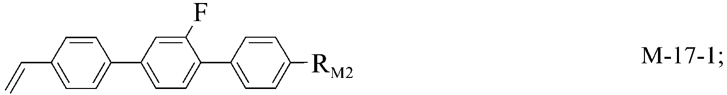 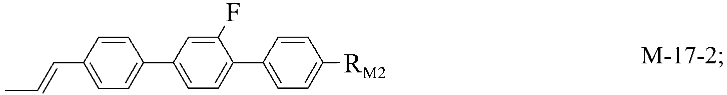 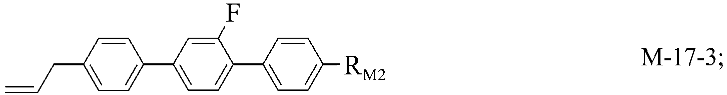 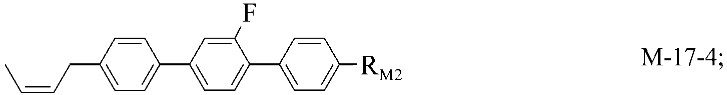 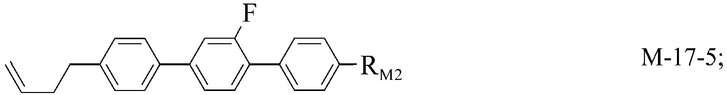 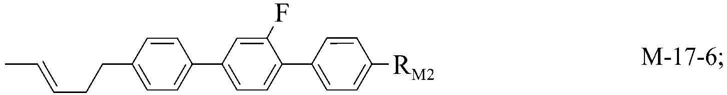 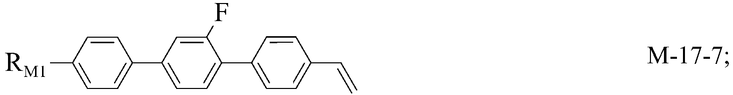 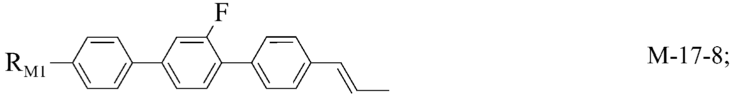 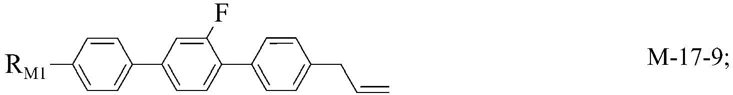 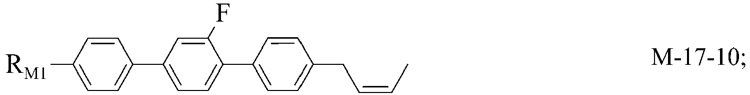 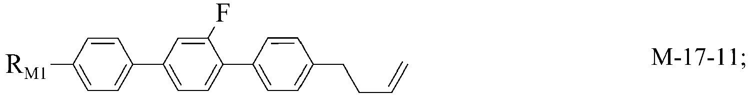 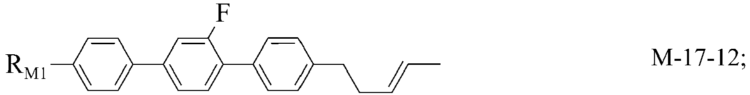 and 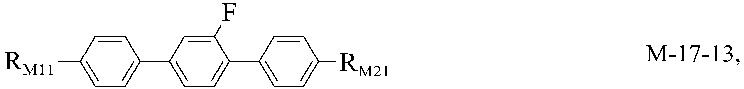
wherein R_{M1} and R_{M2} each independently represents C₁₋₁₂ linear alkyl, C₃₋₁₂ branched alkyl, or C₁₋₉ linear alkoxy;
R_{M11} and R_{M21} each independently represents C₂₋₈ linear alkenyl.

In some embodiments of the present invention, the compound of general formula M-17 is selected from a group consisting of the following compounds: 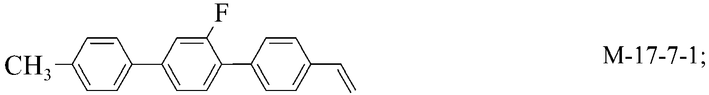 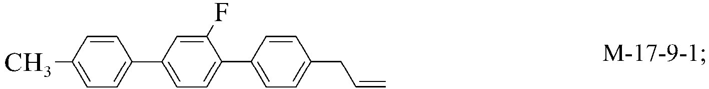 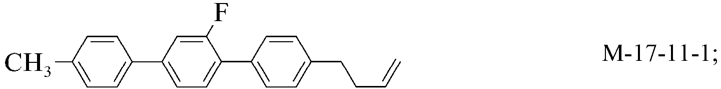 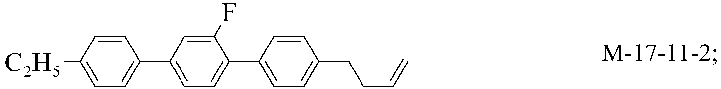 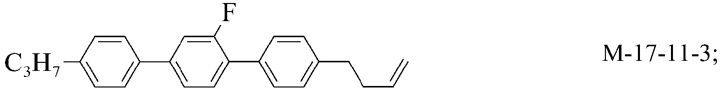 and

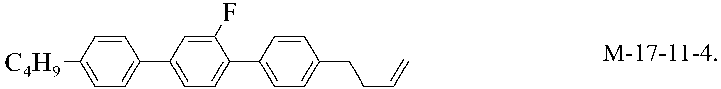

In some embodiments of the present invention, it is preferred to adjust the content of the compound of general formula M, so that the liquid crystal composition of the present invention can have an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures.

In some embodiments of the present invention, the compound of general formula M provides 0.1%-90% by weight of the liquid crystal composition, for example, 0.1 %, 1%, 3%, 5%, 8%, 10%, 12%, 15%, 18%, 20%, 22%, 25%, 28%, 30%, 32%, 35%, 38%, 40%, 42%, 45%, 48%, 50%, 52%, 55%, 58%, 60%, 62%, 65%, 66%, 68%, 70%, 72%, 74%, 76%, 78%, 79%, 80%, 81%, 82%, 84%, 86%, 88%, 90%, or a range between any two of these numerical values, preferably, the compound of general formula M provides 30%-90% by weight of the liquid crystal composition.

In some embodiments of the present invention, anyone or a combination of at least two of the compound of general formula M-1, the compound of general formula M-3, the compound of general formula M-5, the compound of general formula M-9, the compound of general formula M-12, the compound of general formula M-13, the compound of general formula M-15, the compound of general formula M-17 and the compound of general formula M-25 provides 56%-82% by weight of the liquid crystal composition (including all of the numerical values or sub-ranges therebetween); for example, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, or a range between any two of these numerical values.

In some embodiments of the present invention, anyone or a combination of at least two of the compound of general formula M-1-1-2, the compound of general formula M-1-1-3, the compound of general formula M-1-1-4, the compound of general formula M-1-2-3, the compound of general formula M-3, the compound of general formula M-5, the compound of general formula M-9, the compound of general formula M-12-1-1, the compound of general formula M-12-5-1, the compound of general formula M-12-11-2, the compound of general formula M-13, the compound of general formula M-15, the compound of general formula M-17-11-1, the compound of general formula M-17-11-2, the compound of general formula M-17-11-3 and the compound of general formula M-25 provides 56%-82% by weight of the liquid crystal composition (including all of the numerical values or sub-ranges therebetween); for example, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, or a range between any two of these numerical values.

In some embodiments of the present invention, the liquid crystal composition of the present invention further comprises at least one compound selected from a group consisting of compound of general formula N-1 and compound of general formula N-2: 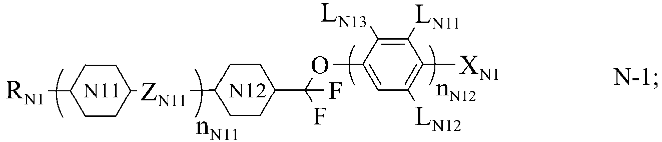 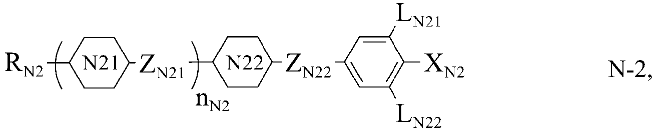
wherein, R_{N1} and R_{N2} each independently represents C₁₋₁₂ (for example, C₁, C₂, C₃, C₄, C₅, C₆, C₇, C₈, C₉, C₁₀, C₁₁ or C₁₂) linear alkyl, C₃₋₁₂ (for example, C₃, C₄, C₅, C₆, C₇, C₈, C₉, C₁₀, C₁₁ or C₁₂) branched alkyl, 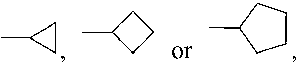 wherein one or more nonadjacent -CH₂- in the C₁₋₁₂ linear alkyl or the C₃₋₁₂ branched alkyl can each be independently replaced by -CH=CH-, -C=C-, -O-, -CO-, -CO-O- or -O-CO-; and one or more -H in the C₁₋₁₂ linear alkyl, C₃₋₁₂ branched alkyl, 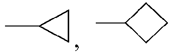 or 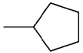 can each be independently substituted by -F or -Cl;
ring 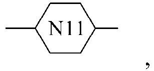 ring 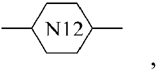 ring 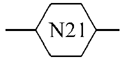 and ring 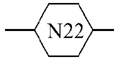 each independently represents 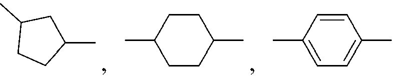 or 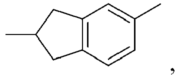 wherein one or more -CH₂- in 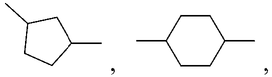 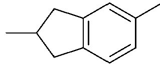 can be replaced by -O-, and one or at most two single bonds in the rings can be replaced by double bond; one or more -H in 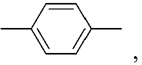 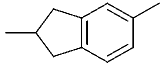 can be substituted by -F, -Cl or -CN, and one or more -CH= in the rings can be replaced by -N=;
Z_{N11}, Z_{N21} and Z_{N22} each independently represents single bond, -CH₂CH₂-, -CF₂CF₂-, -CO-O-, -O-CO-, -O-CO-O-, -CH=CH-, -CF=CF-, -CH₂O- or -OCH₂-;
L_{N11}, L_{N12}, L_{N21} and L_{N22} each independently represents -H, halogen, C₁₋₃ halogenated alkyl, or C₁₋₃ halogenated alkoxy;
L_{N13} represents -H, C₁₋₃ alkyl or alkoxy;
X_{N1} and X_{N2} each independently represents halogen, C₁₋₅ (for example, C₁, C₂, C₃, C₄ or C₅) halogenated alkyl, C₁₋₅ (for example, C₁, C₂, C₃, C₄ or C₅) halogenated alkoxy, C₂₋₅ (for example, C₂, C₃, C₄ or C₅) halogenated alkenyl, or C₂₋₅ (for example, C₂, C₃, C₄ or C₅) halogenated alkenoxy;
n_{N11} represents 0, 1, 2 or 3, wherein, when n_{N11} represents 2 or 3, ring 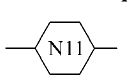 can be the same or different, and Z_{N11} can be the same or different;
wherein, when n_{N11} represents 2, 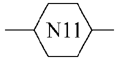 is not 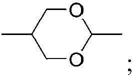
n_{N12} represents 1 or 2, wherein when n_{N12} represents 2, ring 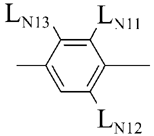 can be the same or different; and
n_{N2} represents 0, 1, 2 or 3, wherein when n_{N2} represents 2 or 3, ring 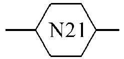 can be the same or different, and Z_{N21} can be the same or different.

In some embodiments of the present invention, the compound of general formula N-1 is selected from a group consisting of the following compounds: 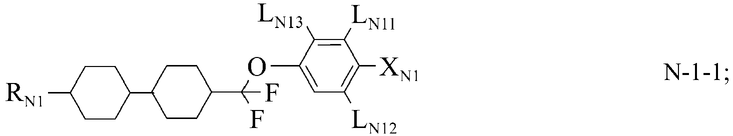 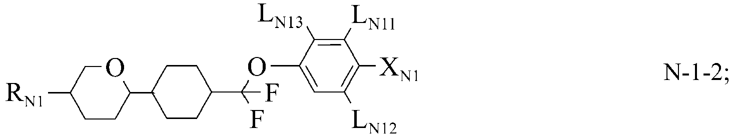 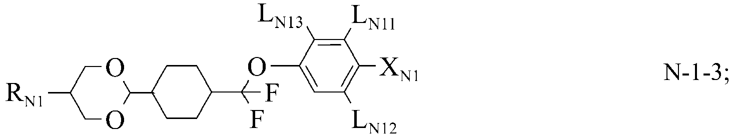 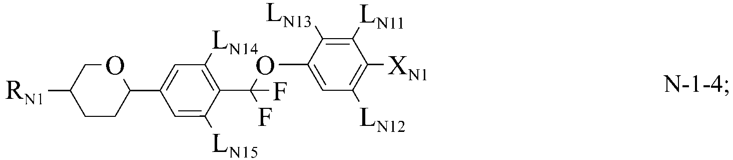 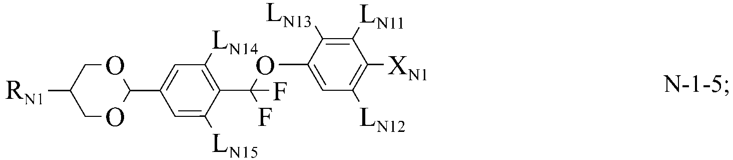 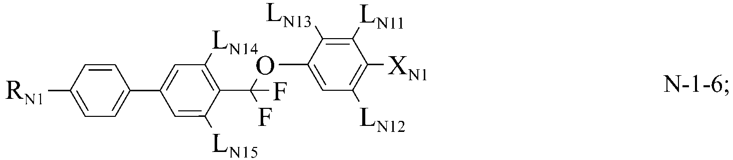 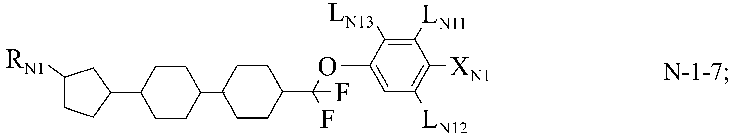 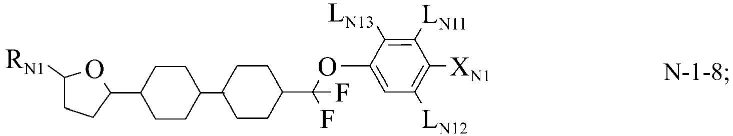 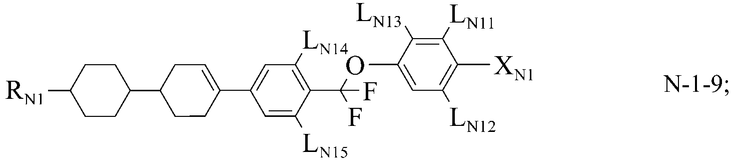 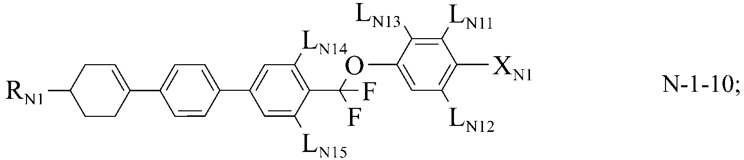 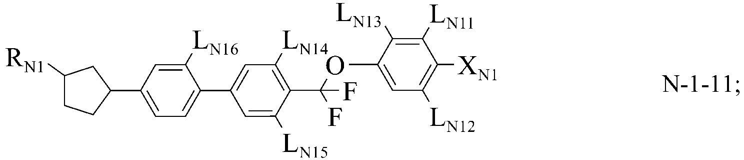 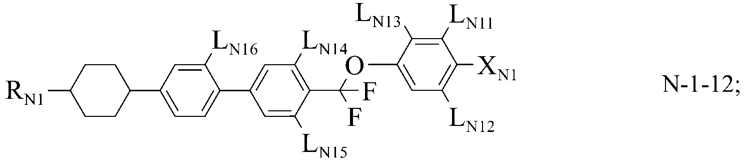 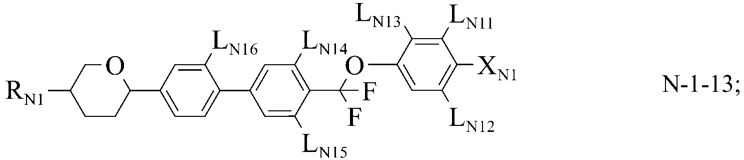 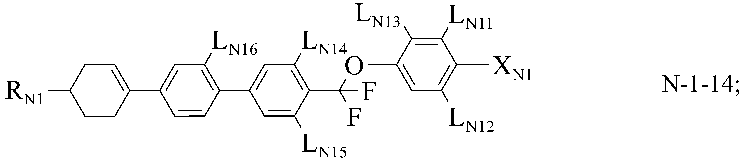 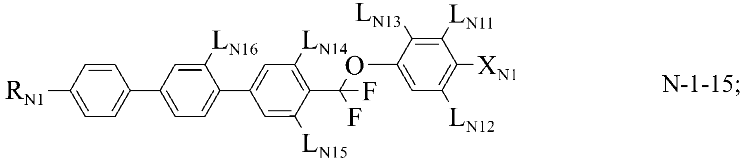 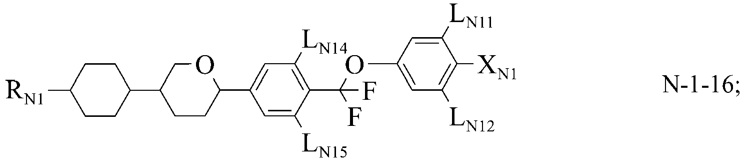 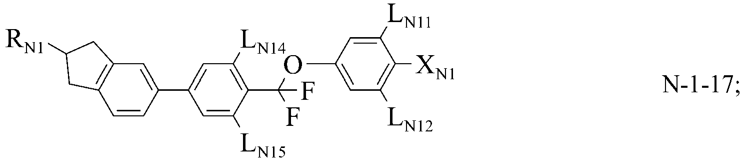 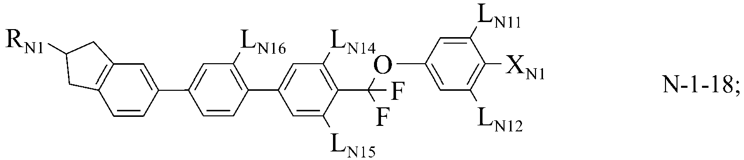 and 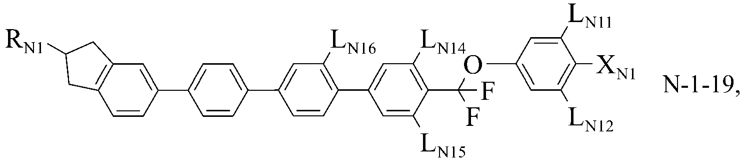
wherein, R_{N1} represents C₁₋₈ linear alkyl, 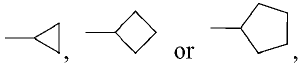 wherein one or more nonadjacent -CH₂- in C₁₋₈ linear alkyl can each be independently replaced by -CH=CH-, -C=C-, -O-, -CO-, -CO-O- or -O-CO-; and one or more -H in these groups can each be independently substituted by -F or -Cl;
L_{N11}, L_{N12}, L_{N14}, L_{N15} and L_{N16} each independently represents -H or -F;
L_{N13} represents -H or -CH₃; and
X_{N1} represents -F, -CF₃ or -OCF₃.

In some embodiments of the present invention, in order to achieve a liquid crystal composition having an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures, the compound of general formula N-1 comprises anyone or a combination of at least two of the compound of general formula N-1-1, the compound of general formula N-1-6 and the compound of general formula N-1-12.

In some embodiments of the present invention, the compound of general formula N-2 is selected from a group consisting of the following compounds: 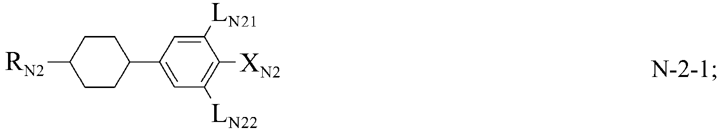 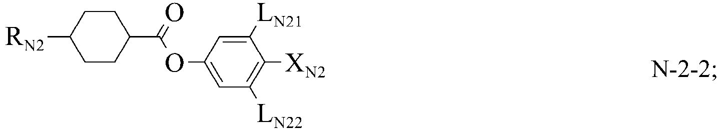 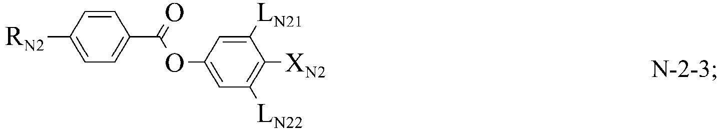 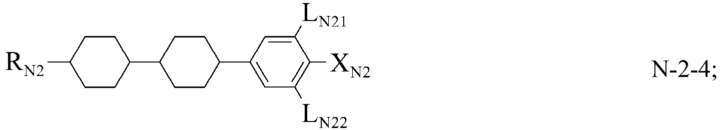 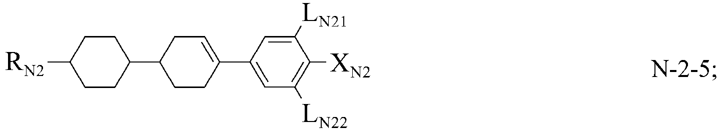 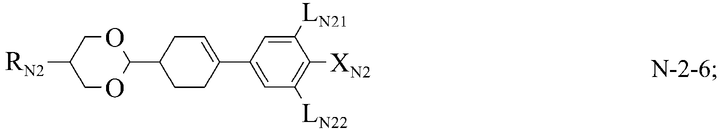 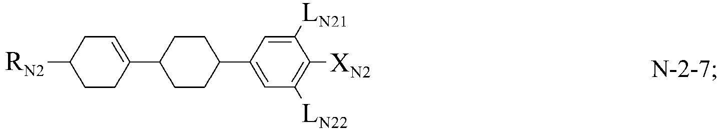 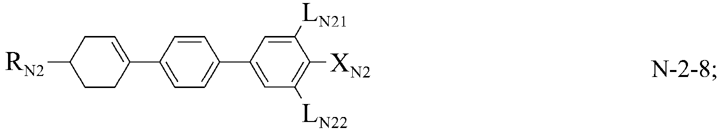 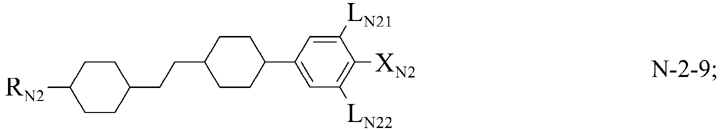 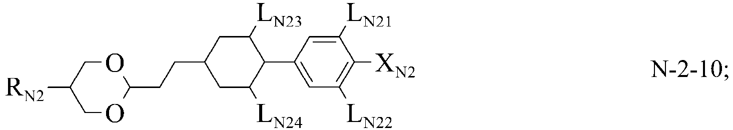 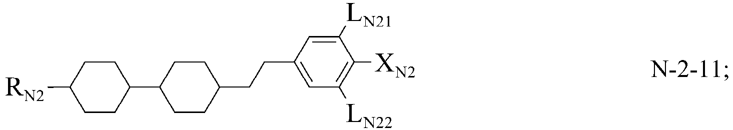 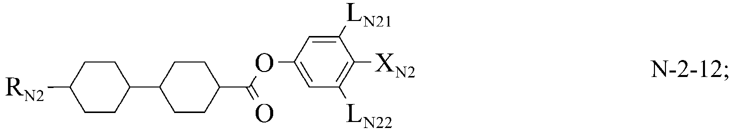 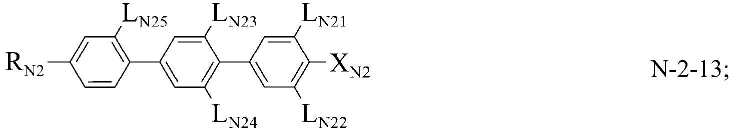 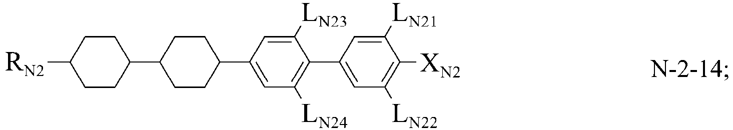 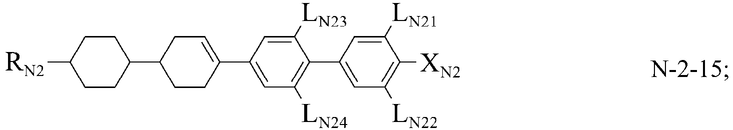 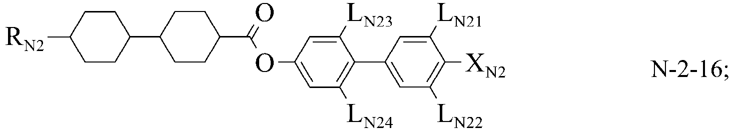 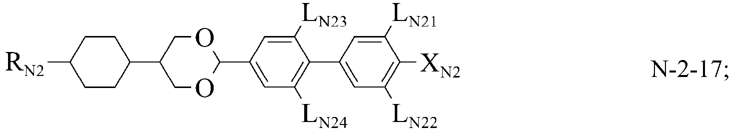 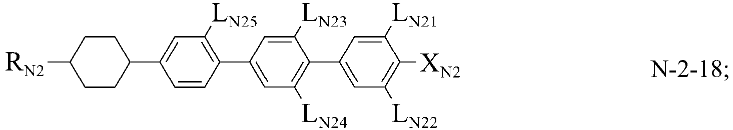 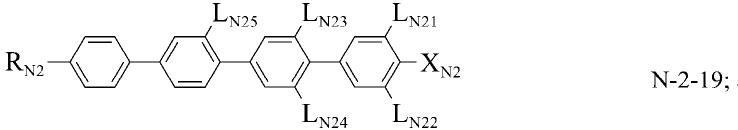 and 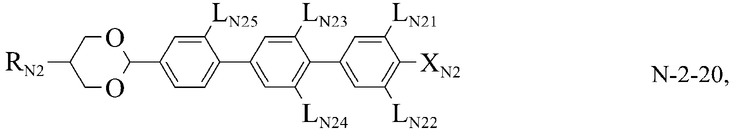
wherein, R_{N2} represents C₁₋₈ linear alkyl, wherein one or more nonadjacent -CH₂- in C₁₋₈ linear alkyl can each be independently replaced by -CH=CH-, -C≡C-, -O-, -CO-, -CO-O- or -O-CO-; and one or more -H in these groups can each be independently substituted by -F or -Cl;
L_{N21}, L_{N22}, L_{N23}, L_{N24} and L_{N25} each independently represents -H or -F; and
X_{N2} represents -F, -CF₃ or -OCF₃.

In some embodiments of the present invention, in order to achieve a liquid crystal composition having an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures, the compound of general formula N-2 comprises anyone or a combination of at least two of the compound of general formula N-2-5, the compound of general formula N-2-14 and the compound of general formula N-2-20.

In some embodiments of the present invention, it is preferred to adjust the content of the compound of general formula N-1 and/or the compound of general formula N-2, so that the liquid crystal composition of the present invention can have an appropriate perpendicular dielectric constant, an appropriate dielectric anisotropy, a relatively large optical anisotropy, a relatively small rotational viscosity, a shorter gray-to-gray response time, a relatively good low-temperature storage stability, a relatively good flicker value and a larger phase width to meet display requirements at lower temperatures.

In some embodiments of the present invention, the compound selected from a group consisting of compound of general formula N-1 and compound of general formula N-2 provides 0.1%-50% by weight of the liquid crystal composition (including all of the numerical values or sub-ranges therebetween), for example, 0.1%, 1%, 2%, 3%, 4%, 5%, 6%, 8%, 9%, 10%, 11%, 12%, 14%, 16%, 18%, 20%, 21%, 23%, 25%, 26%, 27%, 29%, 30%, 32%, 33%, 35%, 37%, 39%, 40%, 42%, 44%, 46%, 48%, 50%, or a range between any two of these numerical values.

In some embodiments of the present invention, the compound of general formula N-1 provides 0.1%-30% by weight of the liquid crystal composition (including all of the numerical values or sub-ranges therebetween), for example, 0.1%, 1%, 2%, 3%, 4%, 5%, 6%, 8%, 9%, 10%, 11%, 12%, 14%, 16%, 18%, 20%, 22%, 24%, 26%, 28%, 30%, or a range between any two of these numerical values; preferably, the compound of general formula N-1 provides 1%-20% by weight of the liquid crystal composition.

In some embodiments of the present invention, anyone or a combination of at least two of the compound of general formula N-1-1, the compound of general formula N-1-6 and the compound of general formula N-1-12 provides 0.1%-18% by weight of the liquid crystal composition (including all of the numerical values or sub-ranges therebetween); for example, 0.1%, 1%, 2%, 3%, 4%, 5%, 6%, 7%, 8%, 9%, 10%, 11%, 12%, 13%, 14%, 15%, 16%, 17%, 18%, or a range between any two of these numerical values.

In some embodiments of the present invention, the compound of general formula N-2 provides 0.1%-30% by weight of the liquid crystal composition (including all of the numerical values or sub-ranges therebetween), for example, 0.1%, 1%, 2%, 3%, 4%, 5%, 6%, 8%, 9%, 10%, 11%, 12%, 14%, 16%, 18%, 20%, 22%, 24%, 26%, 28%, 30%, or a range between any two of these numerical values; preferably, the compound of general formula N-2 provides 1%-20% by weight of the liquid crystal composition.

In some embodiments of the present invention, anyone or a combination of at least two of the compound of general formula N-2-5, the compound of general formula N-2-14 and the compound of general formula N-2-20 provides 0.1%-10% by weight of the liquid crystal composition (including all of the numerical values or sub-ranges therebetween); for example, 0.1%, 1%, 2%, 3%, 4%, 5%, 6%, 7%, 8%, 9%, 10%, or a range between any two of these numerical values.

In some embodiments of the present invention, the liquid crystal composition further comprises at least one compound of general formula P: 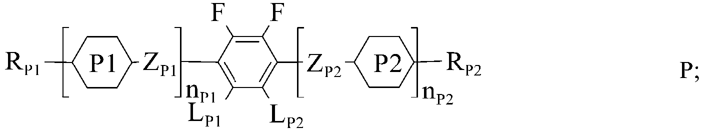
wherein, R_{P1} and R_{P2} each independently represents C₁₋₁₂ (for example, C₁, C₂, C₃, C₄, C₅, C₆, C₇, C₈, C₉, C₁₀, C₁₁ or C₁₂) linear alkyl, C₃₋₁₂ (for example, C₃, C₄, C₅, C₆, C₇, C₈, C₉, C₁₀, C₁₁ or C₁₂) branched alkyl, 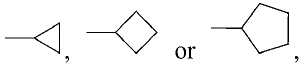 wherein one or more nonadjacent -CH₂- in C₁₋₁₂ linear alkyl or C₃₋₁₂ branched alkyl can each be independently replaced by -CH=CH-, -C≡C-, -O-, -CO-, -CO-O- or -O-CO-;
ring 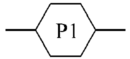 and ring 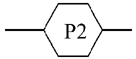 each independently represents 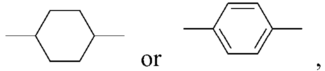 wherein one or -CH₂- in the 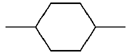 can be replaced by -O-, one or more single bonds in the rings can be replaced by double bond, wherein one or more -H in the 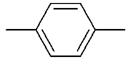 can be substituted by -F, -Cl or -CN, and one or more -CH= in the rings can be replaced by -N=;
Z_{P1} and Z_{P2} each independently represents single bond, -CO-O-, -O-CO-, -CH₂O-, -OCH₂-, -CH=CH-, -C≡C-, -CH₂CH₂-, -CF₂CF₂-, -(CH₂)₄-, -CF₂O- or -OCF₂-;
L_{P1} and L_{P2} each independently represents -H, halogen, or C₁₋₃ (for example, C₁, C₂ or C₃) alkyl; and
n_{P1} represents 0, 1, 2 or 3, n_{P2} represents 0 or 1, and 0≤n_{P1}+n_{P2}≤3; when n_{P1} represents 2 or 3, ring 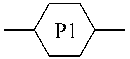 is the same or different, and Z_{P1} is the same or different.

In some embodiments of the present invention, both L_{P1} and L_{P2} represent -H.

In some embodiments of the present invention, the compound of general formula P is selected from a group consisting of the following compounds: 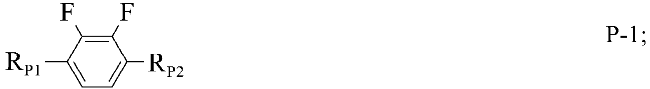 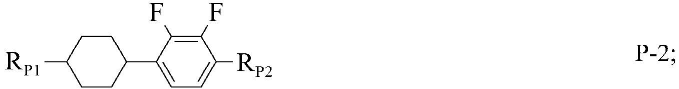 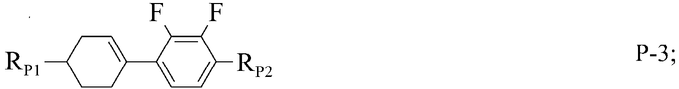 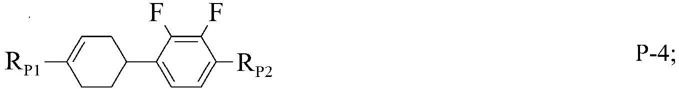 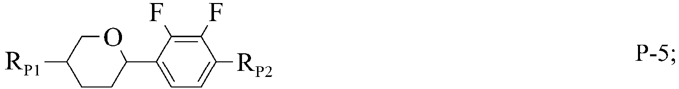 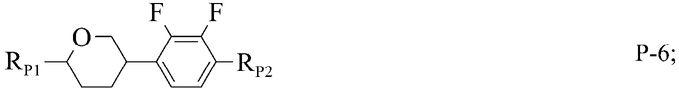 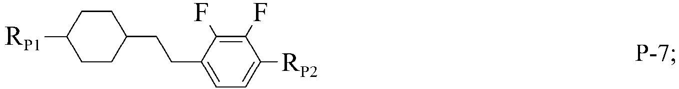 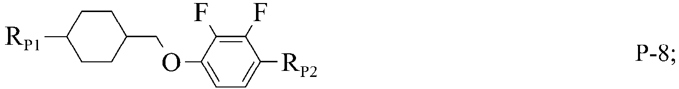 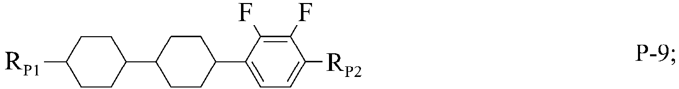 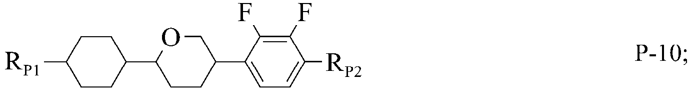 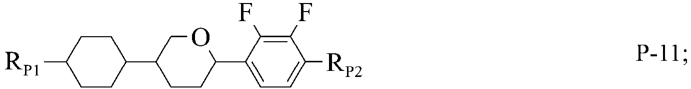 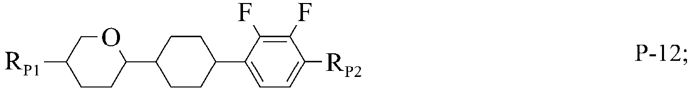 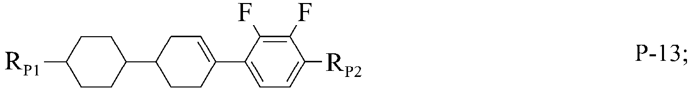 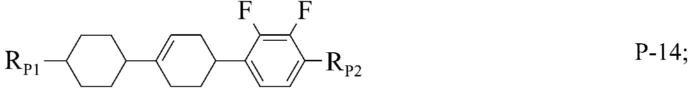 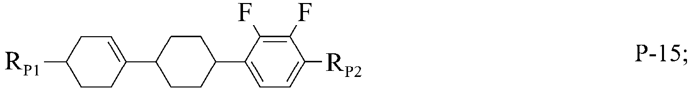 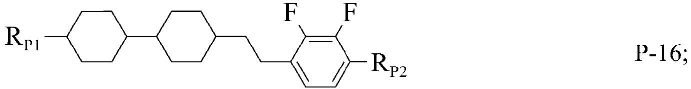 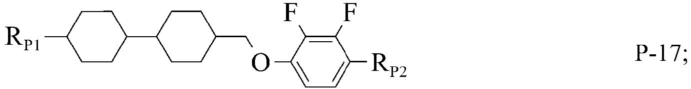 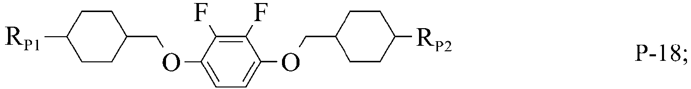 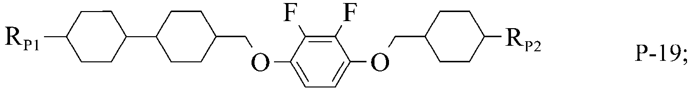 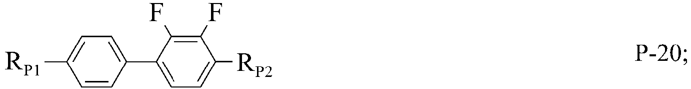 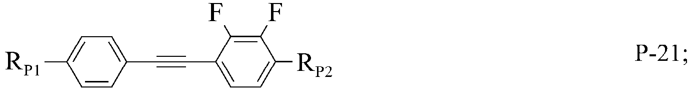 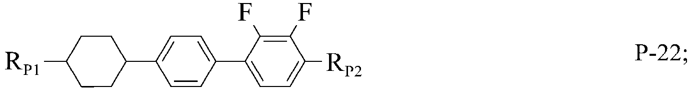 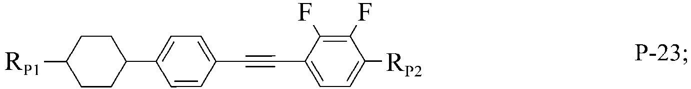 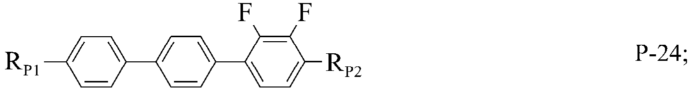 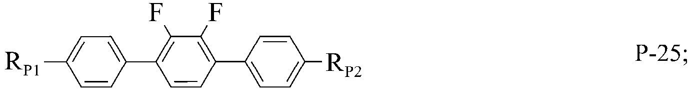 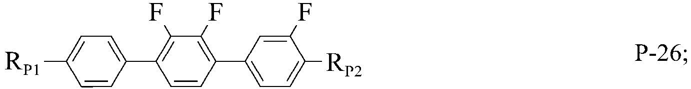 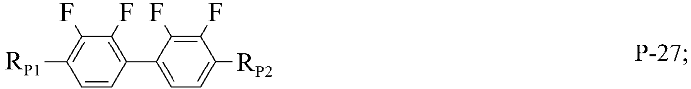 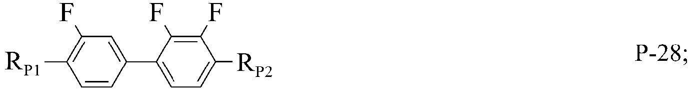 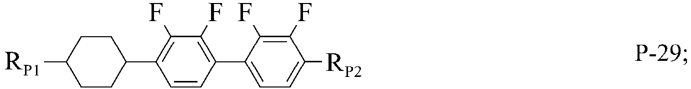 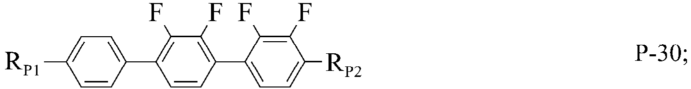 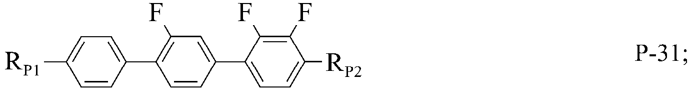 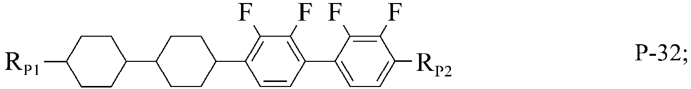 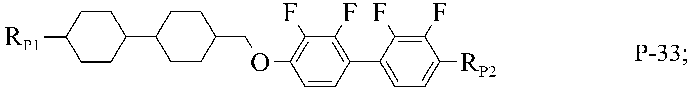 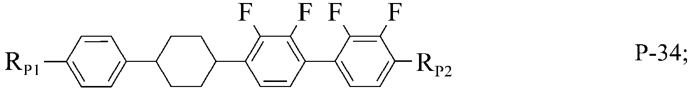 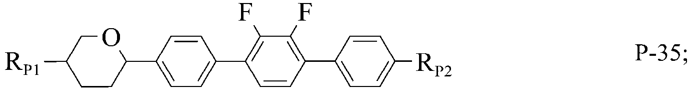 and

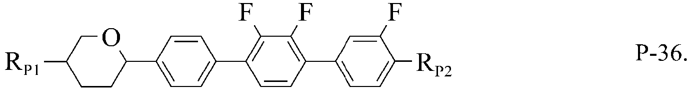

In some embodiments of the present invention, preferably, R_{P1} and R_{P2} each independently represents C₁₋₁₀ linear alkyl, C₃₋₁₀ branched alkyl, C₁₋₉ linear alkoxy, C₃₋₉ branched alkoxy, C₂₋₁₀ linear alkenyl, or C₃₋₁₀ branched alkenyl; further preferably, R_{P1} and R_{P2} each independently represents C₁₋₈ linear alkyl, C₁₋₇ linear alkoxy, or C₂₋₈ linear alkenyl.

In some embodiments of the present invention, the compound of general formula P-20 is selected from the following compound:

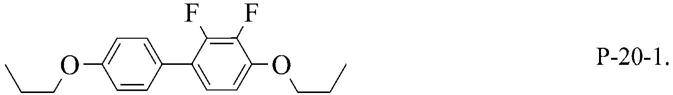

In some embodiments of the present invention, the compound of general formula P provides 0.1%-20% by weight of the liquid crystal composition (including all of the numerical values or sub-ranges therebetween), for example, 0.1%, 1%, 2%, 3%, 4%, 5%, 6%, 7%, 8%, 9%, 10%, 11%, 12%, 13%, 14%, 15%, 16%, 17%, 18%, 19%, 20%, or a range between any two of these numerical values, preferably, the compound of general formula P provides 1%-10% by weight of the liquid crystal composition.

In some embodiments of the present invention, the compound of general formula N-1 provides 1%-3% by weight of the liquid crystal composition.

Another aspect of the present invention provides use of the aforesaid liquid crystal composition in a liquid crystal display device, particularly in a vehicle-mounted liquid crystal display device.

In some embodiments of the present invention, the liquid crystal composition further comprises at least one additive.

Other than the above compounds, the liquid crystal composition of the present invention may contains conventional nematic liquid crystal, smectic liquid crystal, cholesteric liquid crystal, dopants, antioxidant, ultraviolet absorber, infrared absorber, polymerizable monomer, light stabilizer or the like.

Dopants may be preferably added in the liquid crystal composition of the present invention are shown as follows: 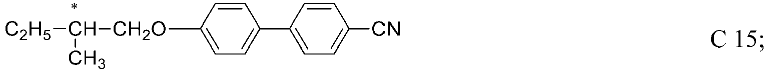 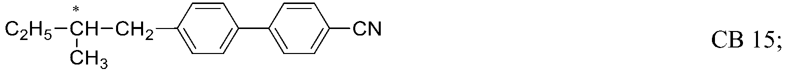 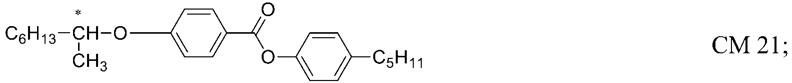 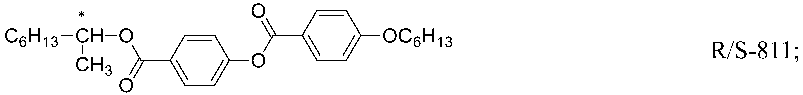 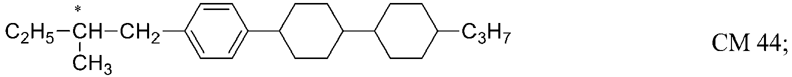 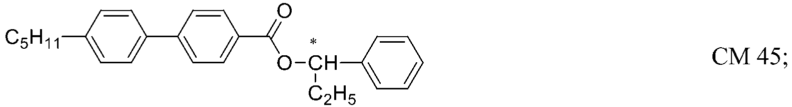 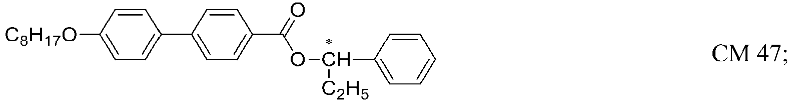 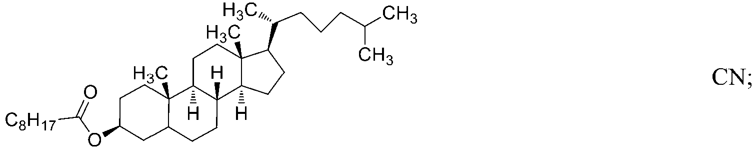 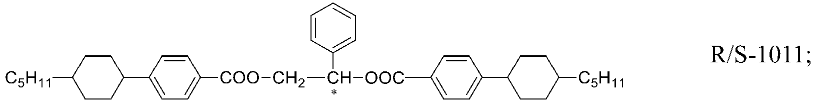 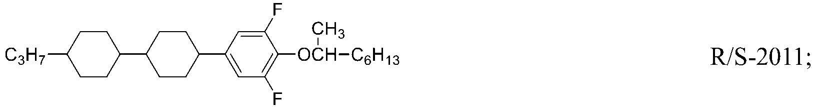 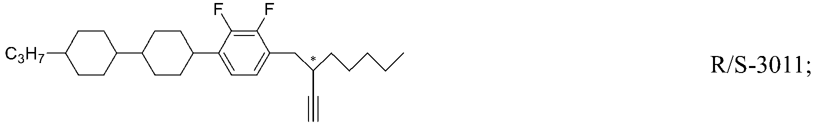 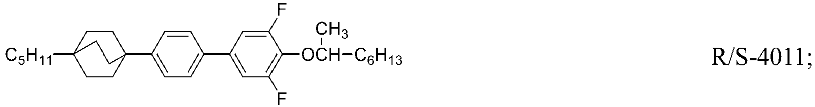 and 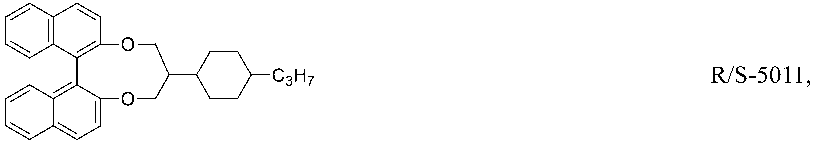 wherein, * represents chiral site.

In some embodiments of the present invention, dopants provide 0%-5% by weight of the liquid crystal composition; preferably, dopants provide 0.01%-1% by weight of the liquid crystal composition.

Further, additives (such as antioxidant, light stabilizer, ultraviolet absorber and the like) used in the liquid crystal composition in the present invention are preferably selected from the following substance: 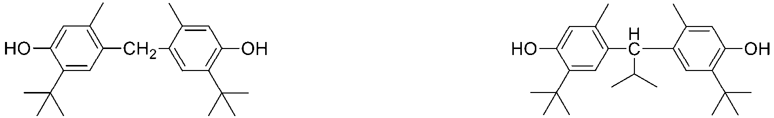 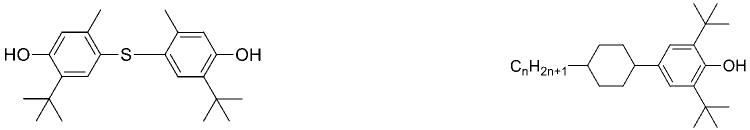 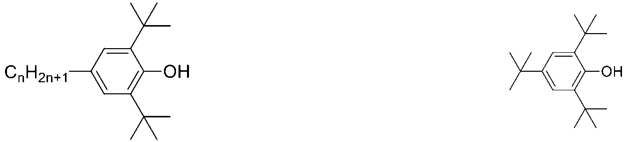 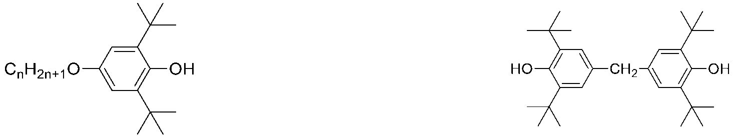 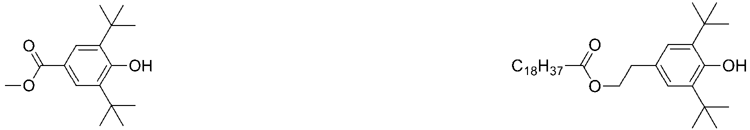 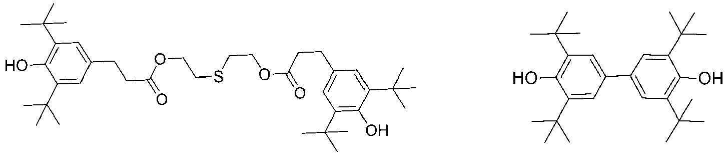 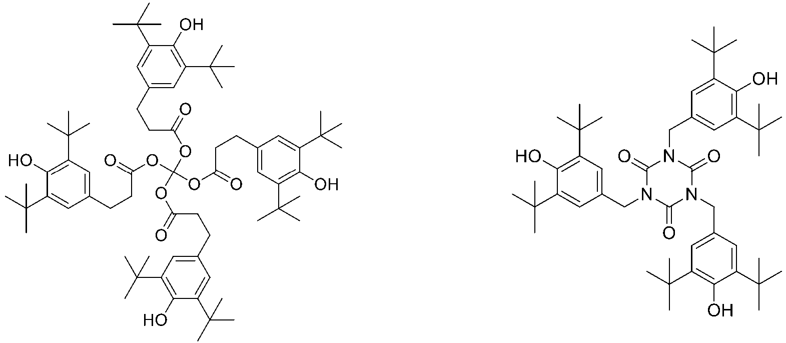 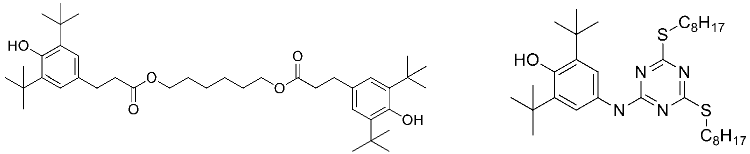 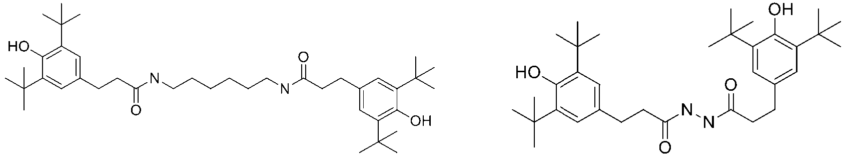 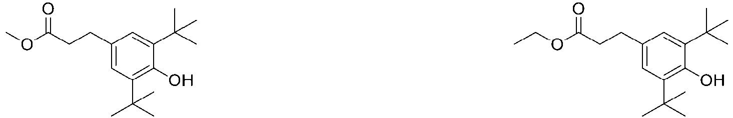 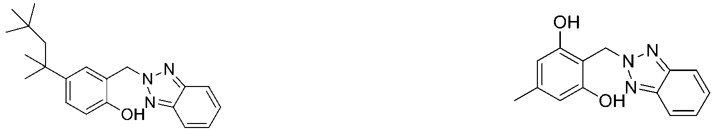 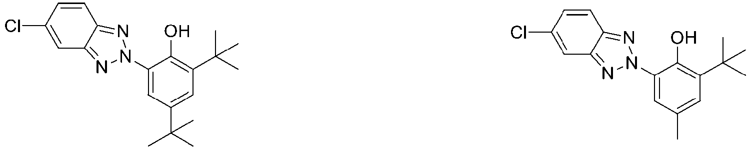 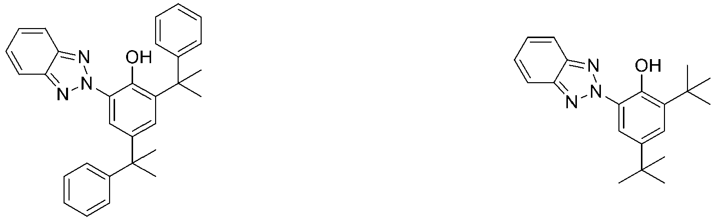 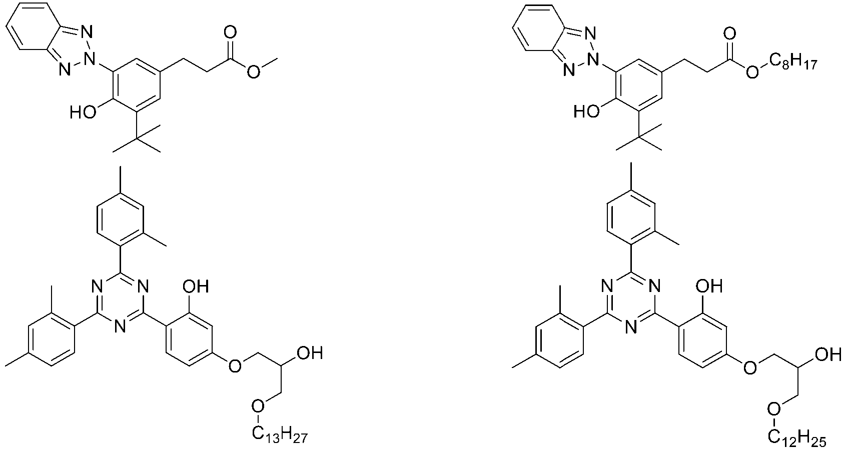 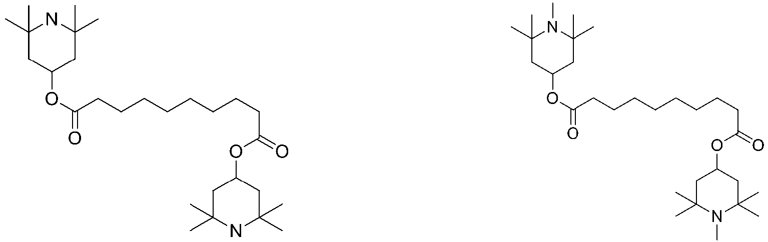 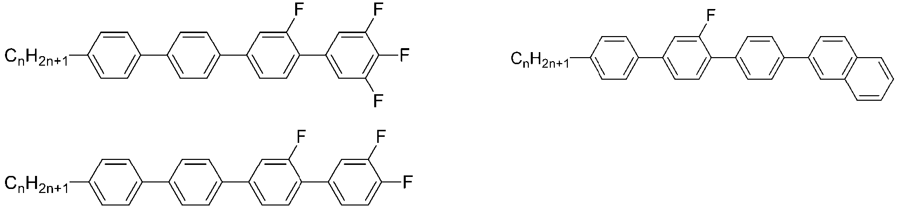 wherein, n represents a positive integer of 1-12.

Preferably, the antioxidant is selected from the following compounds:

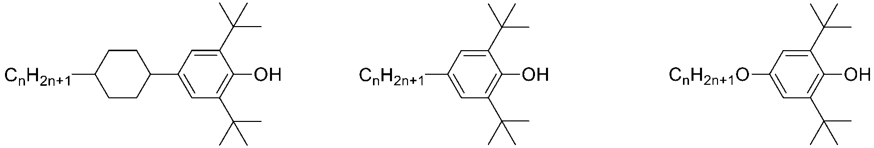

In some embodiments of the present invention, additives provide 0%-5% by weight of the liquid crystal composition; preferably, additives provide 0.01%-1% by weight of the liquid crystal composition.

For the second aspect, the present invention provides a liquid crystal display device, and said liquid crystal display device comprises the liquid crystal composition as stated in the first aspect,

In some embodiments of the present invention, the liquid crystal display device is a vehicle-mounted liquid crystal display device.

Compared with the prior art, the present invention has the following beneficial effects:
In the liquid crystal composition provided in the present invention, by means of mutual compounding of the specific structures and contents of the compounds, the liquid crystal composition has a larger phase width to meet display requirements at lower temperatures while having an appropriate perpendicular dielectric constant, an appropriate dielectric anisotropy, a relatively large optical anisotropy, a relatively small rotational viscosity, a shorter gray-to-gray response time, a relatively good low-temperature storage stability, and a relatively good flicker value, so that the liquid crystal display device including the same has a relatively small threshold voltage, a relatively large response speed, a relatively high contrast ratio, and a relatively wide operating temperature range.

### Detailed Embodiments

The technical solution of the present invention will be further illustrated by the detailed embodiments below. It should be clear for the person skilled in the art that, the Examples are only used to help to understand the present invention, and shall not be seen as specific limitations on the present invention.

For the convenience of the expression, in the following Examples and Comparative Examples, the group structures of the components in the liquid crystal composition are represented by the codes listed in Table 1:

**Table 1**

| Unit structure of group | Code | Name of group |
|---|---|---|
| 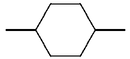 | C | 1,4-cyclohexylidene |
| 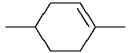 | L | 1, 4-cyclohexene |
| 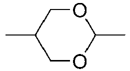 | D | 1,3-dioxane-2,5-diyl |
| 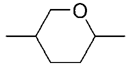 | A | 2-oxacyclohexane |
| 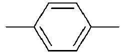 | P | 1,4-phenylene |
| 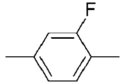 | G | 2-fluoro-1,4-phenylene |
| 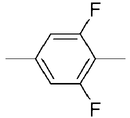 | U | 2,6-difluoro-1,4-phenylene |
| 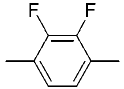 | W | 2,3-difluoro-1,4-phenylene |
| -CF₂O- | Q | difluoro ether group |
| -COO- | E | ester bridge group |
| -O- | O | oxygen substituent |
| -F | F | fluorine substituent |
| -CF₃ | CF₃ | trifluoromethyl |
| -CH=CH- or -CH=CH₂ | V | ethenylene or ethenyl |
| -CH₂O- | lO | methyleneoxy |
| -CₙH₂ₙ₊₁ or -CₙH₂ₙ- | n (n represents a positive integer of 1-12) | alkyl/alkylene |

Taking the compound with the following structural formula as an example: 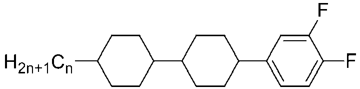 represented by the codes listed in Table 1, this structural formula can be expressed as nCCGF, n in the code represents the number of the carbon atoms of the alkyl on the left, for example, n is "3", meaning that the alkyl is -C₃H₇; C in the code represents 1,4-cyclohexylidene, G represents 2-fluoro-1,4-phenylene, and F represents fluorine substituent.

In the following Examples and Comparative Examples, the abbreviated codes of test items are as followings:

| | |
|---|---|
| Cp | clearing point (nematic-isotropy phases transition temperature, °C) |
| Δn | optical anisotropy (589 nm, 25°C) |
| ε_{⊥} | dielectric constant in the direction perpendicular to the molecular axis |
| Δε | dielectric anisotropy (1 KHz, 25°C) |
| γ₁ | rotational viscosity (mPa•s, 25°C) |
| GTG | Time required for switching from one gray scale to the other gray scale (-30°C, ms) |
| LTS(-42°C) | low-temperature storage stability (-42°C, day) |
| Flicker | Flicker value(dB) |

wherein:
Cp: tested by melting point apparatus;
Δn: tested using an Abbe Refractometer under a sodium lamp (589 nm) as light source, at 25°C;
Δε: Δε=ε_{∥}-ε_{⊥}, wherein, ε_{∥} is the dielectric constant parallel to the molecular axis, ε _{⊥} is the dielectric constant perpendicular to the molecular axis, test conditions: 25°C, 1 KHz, test cell is TN cell with a cell gap of 7 µm;
γ₁: tested using a LCM-2 type liquid crystal physical property evaluation system; test conditions: 25°C, 160-260 V, the cell gap for test is 20 µm;
GTG: tested using a DMS505 tester; test conditions: -30°C, FFS test cell with a cell gap of 3.5 µm;
LTS(-42°C): nematic phase liquid crystal medium is placed in a glass bottle, stored at a constant temperature of -42°C, the time recorded when crystal precipitation is observed, for example, ">10" means crystals do not precipitate after 10 days of storage.

Flicker value: tested using a DMS505 tester; test conditions: 25°C, 60HZ, L127 voltage driven, ECB test cell with a cell gap of 4 µm (FFS cell with a cell gap of 3.0 µm).

The compounds used in the following Examples can either be synthesized by methods known in the art or be obtained commercially. The synthetic techniques are conventional, and each of the obtained liquid crystal compositions is tested and meets the standards of electronic compound.

The liquid crystal compositions are prepared in accordance with the proportions of each of the liquid crystal compositions in the following Examples. The preparation of the liquid crystal compositions is carried out according to the conventional methods in the art, such as mixed and prepared according to the stated ratios by means of heating, ultrasonic processing, suspending and so forth.

### Example 1

The liquid crystal composition of Example 1 is prepared according to each compound and weight percentage thereof in the liquid crystal composition as listed in Table 2, and the performance tests are carried out by filling the same into the two substrates of a liquid crystal display device.

**Table 2 Formulation and test results for the performance parameters of the liquid crystal composition**

| Code of component | Weight percentage | Code of general formula | Test result of performance parameters | |
|---|---|---|---|---|
| 3CLPCF3 | 3 | N-2-5 | Cp | 102 |
| 3CCQUF | 5 | N-1-1 | Δn | 0.101 |
| VCCP1 | 12.5 | M-12-1-1 | Δε | 4.4 |
| 3CCV | 38 | M-1-1-3 | ε_{⊥} | 2.7 |
| V2CCP1 | 7.5 | M-12-5-1 | γ₁ | 69 |
| 3CCV1 | 7.5 | M-1-2-3 | GTG | 260 |
| 3CDUQUF | 6.5 | I-1 | Flicker | -63.56 |
| 2CDUQUF | 2 | I-1 | LTS(-42°C) | >10 |
| 3DGUQUF | 1.5 | II-1 | | |
| 4DGUQUF | 1.5 | II-1 | | |
| 3CPP2V | 3 | III-5-1 | | |
| 3CPP2V1 | 3 | III-6-1 | | |
| 1PGP2V | 3 | M-17-11-1 | | |
| 2PGP2V | 3 | M-17-11-2 | | |
| 3PGP2V | 3 | M-17-11-3 | | |
| Total | 100 | | | |

### Comparative Example 1

The liquid crystal composition of Comparative Example 1 is prepared according to each compound and weight percentage thereof in the liquid crystal composition as listed in Table 3, and the performance tests are carried out by filling the same into the two substrates of a liquid crystal display device.

**Table 3 Formulation and test results for the performance parameters of the liquid crystal composition**

| Code of component | Weight percentage | Code of general formula | Test result of performance parameters | |
|---|---|---|---|---|
| 3CLPCF3 | 3 | N-2-5 | Cp | 99.5 |
| 3CCQUF | 5 | N-1-1 | Δn | 0.097 |
| VCCP1 | 12.5 | M-12-1-1 | Δε | 4.4 |
| 3CCV | 38 | M-1-1-3 | ε_{⊥} | 2.7 |
| V2CCP1 | 7.5 | M-12-5-1 | γ₁ | 72 |
| 3CCV1 | 7.5 | M-1-2-3 | GTG | 293 |
| 3CDUQUF | 6.5 | I-1 | Flicker | -60.26 |
| 2CDUQUF | 2 | I-1 | LTS(-42°C) | <5 |
| 3DGUQUF | 1.5 | II-1 | | |
| 4DGUQUF | 1.5 | II-1 | | |
| 3CPP2 | 3 | M-14 | | |
| 3CPP1 | 3 | M-14 | | |
| 1PGP2V | 3 | M-17-11-1 | | |
| 2PGP2V | 3 | M-17-11-2 | | |
| 3PGP2V | 3 | M-17-11-3 | | |
| Total | 100 | | | |

It can be seen from the comparison between Example 1 and Comparative Example 1 that via the optimization on the structures and contents of compound of general formula I, compound of general formula II and compound of general formula III, the liquid crystal composition of the present invention has an appropriate perpendicular dielectric constant, an appropriate dielectric anisotropy, a relatively large optical anisotropy, a relatively high clearing point, a relatively small rotational viscosity, a shorter gray-to-gray response time, a relatively good flicker value, and a relatively long low-temperature storage time.

### Example 2

The liquid crystal composition of Example 2 is prepared according to each compound and weight percentage thereof in the liquid crystal composition as listed in Table 4, and the performance tests are carried out by filling the same into the two substrates of a liquid crystal display device.

**Table 4 Formulation and test results for the performance parameters of the liquid crystal composition**

| Code of component | Weight percentage | Code of general formula | Test result of performance parameters | |
|---|---|---|---|---|
| 3CCGUF | 6 | N-2-14 | Cp | 101 |
| 3CCQUF | 1.5 | N-1-1 | Δn | 0.105 |
| VCCP1 | 10 | M-12-1-1 | Δε | 5.5 |
| 3CLPCF3 | 3 | N-2-5 | ε_{⊥} | 3 |
| 3CCV | 28 | M-1-1-3 | γ₁ | 71 |
| V2CCP1 | 7.5 | M-12-5-1 | GTG | 272 |
| 3CCV1 | 7.5 | M-1-2-3 | Flicker | -62.89 |
| 3PUQUF | 14.5 | N-1-6 | LTS(-42°C) | >10 |
| 3CDUQUF | 6.5 | I-1 | | |
| 3CPP2V | 4.5 | III-5-1 | | |
| 3CPP2V1 | 4 | III-6-1 | | |
| 1PGP2V | 3 | M-17-11-1 | | |
| 3PGP2V | 2 | M-17-11-3 | | |
| 3DGUQUF | 2 | II-1 | | |
| Total | 100 | | | |

### Example 3

The liquid crystal composition of Example 3 is prepared according to each compound and weight percentage thereof in the liquid crystal composition as listed in Table 5, and the performance tests are carried out by filling the same into the two substrates of a liquid crystal display device.

**Table 5 Formulation and test results for the performance parameters of the liquid crystal composition**

| Code of component | Weight percentage | Code of general formula | Test result of performance parameters | |
|---|---|---|---|---|
| 3DGUQUF | 2 | II-1 | Cp | 105 |
| VCCP1 | 12 | M-12-1-1 | Δn | 0.11 |
| 3CCV | 34 | M-1-1-3 | Δε | 4 |
| V2CCP1 | 9 | M-12-5-1 | ε_{⊥} | 2.7 |
| 3CCV1 | 9 | M-1-2-3 | γ₁ | 67 |
| 3PUQUF | 6 | N-1-6 | GTG | 262 |
| 3CDUQUF | 7 | I-1 | Flicker | -65.12 |
| 1VCPP2 | 5 | III-8-1 | LTS(-42°C) | >10 |
| 3CPP2V | 4 | III-5-1 | | |
| 3CPP2V1 | 2 | III-6-1 | | |
| 1PGP2V | 4 | M-17-11-1 | | |
| 2PGP2V | 4 | M-17-11-2 | | |
| 3PGP2V | 2 | M-17-11-3 | | |
| Total | 100 | | | |

### Example 4

The liquid crystal composition of Example 4 is prepared according to each compound and weight percentage thereof in the liquid crystal composition as listed in Table 6, and the performance tests are carried out by filling the same into the two substrates of a liquid crystal display device.

**Table 6 Formulation and test results for the performance parameters of the liquid crystal composition**

| Code of component | Weight percentage | Code of general formula | Test result of performance parameters | |
|---|---|---|---|---|
| 3DGUQUF | 2 | II-1 | Cp | 106 |
| VCCP1 | 10 | M-12-1-1 | Δn | 0.112 |
| 3CLPCF3 | 2 | N-2-5 | Δε | 4 |
| 3CCV | 34 | M-1-1-3 | ε_{⊥} | 2.7 |
| V2CCP1 | 5 | M-12-5-1 | γ₁ | 67 |
| 3CCV1 | 9 | M-1-2-3 | GTG | 259 |
| 3PUQUF | 6 | N-1-6 | Flicker | -65.45 |
| 3CDUQUF | 7 | I-1 | LTS(-42°C) | >10 |
| 1VCPP2 | 5 | III-8-1 | | |
| 3CPP2V | 4 | III-5-1 | | |
| 3CPP2V1 | 2 | III-6-1 | | |
| 1PGP2V | 4 | M-17-11-1 | | |
| 2PGP2V | 4 | M-17-11-2 | | |
| 3PGP2V | 2 | M-17-11-3 | | |
| VCLP1 | 4 | M-13 | | |
| Total | 100 | | | |

### Example 5

The liquid crystal composition of Example 5 is prepared according to each compound and weight percentage thereof in the liquid crystal composition as listed in Table 7, and the performance tests are carried out by filling the same into the two substrates of a liquid crystal display device.

**Table 7 Formulation and test results for the performance parameters of the liquid crystal composition**

| Code of component | Weight percentage | Code of general formula | Test result of performance parameters | |
|---|---|---|---|---|
| 3DGUQUF | 2 | II-1 | Cp | 105 |
| VCCP1 | 12 | M-12-1-1 | Δn | 0.112 |
| 3CCV | 34 | M-1-1-3 | Δε | 4.5 |
| V2CCP1 | 3 | M-12-5-1 | ε_{⊥} | 2.8 |
| 3CCV1 | 9 | M-1-2-3 | γ₁ | 67 |
| 3PUQUF | 6 | N-1-6 | GTG | 268 |
| 3CDUQUF | 7 | I-1 | Flicker | -65.32 |
| 3CLPCF3 | 2 | N-2-5 | LTS(-42°C) | >10 |
| 1VCPP2 | 3 | III-8-1 | | |
| 3CPP2V | 4 | III-5-1 | | |
| 2CPP2V | 2 | III-5-1 | | |
| 3CPP2V1 | 2 | III-6-1 | | |
| 1PGP2V | 4 | M-17-11-1 | | |
| 2PGP2V | 4 | M-17-11-2 | | |
| 3PGP2V | 2 | M-17-11-3 | | |
| VCVCP1 | 2 | M-15 | | |
| 3DPUQUF | 2 | II-5 | | |
| Total | 100 | | | |

### Example 6

The liquid crystal composition of Example 6 is prepared according to each compound and weight percentage thereof in the liquid crystal composition as listed in Table 8, and the performance tests are carried out by filling the same into the two substrates of a liquid crystal display device.

**Table 8 Formulation and test results for the performance parameters of the liquid crystal composition**

| Code of component | Weight percentage | Code of general formula | Test result of performance parameters | |
|---|---|---|---|---|
| 3DGUQUF | 2 | II-1 | Cp | 105 |
| VCCP1 | 12 | M-12-1-1 | Δn | 0.11 |
| 3CCV | 34 | M-1-1-3 | Δε | 4.2 |
| V2CCP1 | 3 | M-12-5-1 | ε_{⊥} | 2.8 |
| 3CCV1 | 9 | M-1-2-3 | γ₁ | 65 |
| 3PUQUF | 6 | N-1-6 | GTG | 263 |
| 3CPUQUF | 2 | N-1-12 | Flicker | -64.98 |
| 3CDUQUF | 5 | I-1 | LTS(-42°C) | >10 |
| 4DPGUF | 2 | N-2-20 | | |
| 1VCPP2 | 3 | III-8-1 | | |
| 3CPP2V | 4 | III-5-1 | | |
| 2CPP2V | 2 | III-5-1 | | |
| 1PGP2V | 4 | M-17-11-1 | | |
| 2PGP2V | 4 | M-17-11-2 | | |
| 3PGP2V | 2 | M-17-11-3 | | |
| VCVCP1 | 4 | M-15 | | |
| 3DPGUF | 2 | N-2-20 | | |
| Total | 100 | | | |

### Example 7

The liquid crystal composition of Example 7 is prepared according to each compound and weight percentage thereof in the liquid crystal composition as listed in Table 9, and the performance tests are carried out by filling the same into the two substrates of a liquid crystal display device.

**Table 9 Formulation and test results for the performance parameters of the liquid crystal composition**

| Code of component | Weight percentage | Code of general formula | Test result of performance parameters | |
|---|---|---|---|---|
| 3CCV | 45 | M-1-1-3 | Cp | 103 |
| 3CCV1 | 9 | M-1-2-3 | Δn | 0.102 |
| 4DGUQUF | 2 | II-1 | Δε | 3.5 |
| 3CDUQUF | 7 | I-1 | ε_{⊥} | 2.7 |
| 3CLPCF3 | 4 | N-2-5 | γ₁ | 62 |
| 1VCPP2 | 3 | III-8-1 | GTG | 245 |
| 3CPP2V | 4 | III-5-1 | Flicker | -64.58 |
| 2CPP2V1 | 2 | III-6-1 | LTS(-42°C) | >10 |
| 1PGP2V | 4 | M-17-11-1 | | |
| 2PGP2V | 4 | M-17-11-2 | | |
| 3PGP2V | 2 | M-17-11-3 | | |
| 3DGUQUF | 2 | II-1 | | |
| VCCP1 | 12 | M-12-1-1 | | |
| Total | 100 | | | |

### Example 8

The liquid crystal composition of Example 8 is prepared according to each compound and weight percentage thereof in the liquid crystal composition as listed in Table 10, and the performance tests are carried out by filling the same into the two substrates of a liquid crystal display device.

**Table 10 Formulation and test results for the performance parameters of the liquid crystal composition**

| Code of component | Weight percentage | Code of general formula | Test result of performance parameters | |
|---|---|---|---|---|
| 3CCV | 43 | M-1-1-3 | Cp | 101 |
| 3CCV1 | 12 | M-1-2-3 | Δn | 0.101 |
| 3DPUQUF | 2 | II-5 | Δε | 3.5 |
| 3CDUQUF | 7 | I-1 | ε_{⊥} | 2.7 |
| 1PP2V1 | 4 | M-5 | γ₁ | 62 |
| 1VCPP2 | 4 | III-8-1 | GTG | 240 |
| 3CPP2V1 | 4 | III-6-1 | Flicker | -64.23 |
| 2CPP2V | 2 | III-5-1 | LTS(-42°C) | >10 |
| 1PGP2V | 4 | M-17-11-1 | | |
| 2PGP2V | 4 | M-17-11-2 | | |
| 3PGP2V | 2 | M-17-11-3 | | |
| 3DGUQUF | 2 | II-1 | | |
| VCCP1 | 10 | M-12-1-1 | | |
| Total | 100 | | | |

### Example 9

The liquid crystal composition of Example 9 is prepared according to each compound and weight percentage thereof in the liquid crystal composition as listed in Table 11, and the performance tests are carried out by filling the same into the two substrates of a liquid crystal display device.

**Table 11 Formulation and test results for the performance parameters of the liquid crystal composition**

| Code of component | Weight percentage | Code of general formula | Test result of performance parameters | |
|---|---|---|---|---|
| 3CCV | 43 | M-1-1-3 | Cp | 100.7 |
| 3CCV1 | 10 | M-1-2-3 | Δn | 0.103 |
| 3DPUQUF | 2 | II-5 | Δε | 3.4 |
| 3CDUQUF | 7 | I-1 | ε_{⊥} | 2.8 |
| 1PP2V1 | 4 | M-5 | γ₁ | 72 |
| VCPP2 | 2 | III-7-1 | GTG | 275 |
| 3CPP2V1 | 4 | III-6-1 | Flicker | -64.89 |
| 2CPP2V | 2 | III-5-1 | LTS(-42°C) | >10 |
| 1PGP2V | 4 | M-17-11-1 | | |
| 2PGP2V | 4 | M-17-11-2 | | |
| 3PGP2V | 2 | M-17-11-3 | | |
| 3DGUQUF | 2 | II-1 | | |
| VCCP1 | 10 | M-12-1-1 | | |
| 2OPWO2 | 2 | P-20 | | |
| VCPP2V | 2 | III-13-3 | | |
| Total | 100 | | | |

### Example 10

The liquid crystal composition of Example 10 is prepared according to each compound and weight percentage thereof in the liquid crystal composition as listed in Table 12, and the performance tests are carried out by filling the same into the two substrates of a liquid crystal display device.

**Table 12 Formulation and test results for the performance parameters of the liquid crystal composition**

| Code of component | Weight percentage | Code of general formula | Test result of performance parameters | |
|---|---|---|---|---|
| 3CCV | 44 | M-1-1-3 | Cp | 101 |
| VCVC2 | 2 | M-9 | Δn | 0.101 |
| VCC2 | 3 | M-1-1-2 | Δε | 3.5 |
| 3CCV1 | 6 | M-1-2-3 | ε_{⊥} | 2.7 |
| 3DPUQUF | 2 | II-5 | γ₁ | 62 |
| 3CDUQUF | 7 | I-1 | GTG | 240 |
| 1PP2V1 | 4 | M-5 | Flicker | -64.23 |
| 1VCPP2 | 3 | III-8-1 | LTS(-42°C) | >10 |
| VLPP2 | 2 | III-14-1 | | |
| 3CPP2V1 | 3 | III-6-1 | | |
| 2CPP2V | 2 | III-5-1 | | |
| 1PGP2V | 4 | M-17-11-1 | | |
| 2PGP2V | 4 | M-17-11-2 | | |
| 3PGP2V | 2 | M-17-11-3 | | |
| 3DGUQUF | 2 | II-1 | | |
| VCCP1 | 10 | M-12-1-1 | | |
| Total | 100 | | | |

### Example 11

The liquid crystal composition of Example 11 is prepared according to each compound and weight percentage thereof in the liquid crystal composition as listed in Table 13, and the performance tests are carried out by filling the same into the two substrates of a liquid crystal display device.

**Table 13 Formulation and test results for the performance parameters of the liquid crystal composition**

| Code of component | Weight percentage | Code of general formula | Test result of performance parameters | |
|---|---|---|---|---|
| 3CCV | 45 | M-1-1-3 | Cp | 103 |
| 4CCV | 4 | M-1-1-4 | Δn | 0.102 |
| 3CCV1 | 5 | M-1-2-3 | Δε | 3.5 |
| 4DGUQUF | 2 | II-1 | ε_{⊥} | 2.7 |
| 3CDUQUF | 5 | I-1 | γ₁ | 62 |
| 3CPUQUF | 1 | N-1-12 | GTG | 245 |
| 3CPPQUF | 1 | N-1-12 | Flicker | -64.58 |
| 2CCP2V | 4 | M-12-11-2 | LTS(-42°C) | >10 |
| VCPP2 | 3 | III-7-1 | | |
| 3CPP2V | 4 | III-5-1 | | |
| 2CPP2V1 | 2 | III-6-1 | | |
| 1PGP2V | 4 | M-17-11-1 | | |
| 2PGP2V | 4 | M-17-11-2 | | |
| 3PGP2V | 2 | M-17-11-3 | | |
| 3DPUQUF | 2 | II-5 | | |
| VCCP1 | 12 | M-12-1-1 | | |
| Total | 100 | | | |

### Comparative Example 2

The liquid crystal composition of Comparative Example 2 is prepared according to each compound and weight percentage thereof in the liquid crystal composition as listed in Table 14, and the performance tests are carried out by filling the same into the two substrates of a liquid crystal display device.

**Table 14 Formulation and test results for the performance parameters of the liquid crystal composition**

| Code of component | Weight percentage | Code of general formula | Test result of performance parameters | |
|---|---|---|---|---|
| 3CLPCF3 | 4.5 | N-2-5 | Cp | 101.5 |
| 3CCQUF | 5 | N-1-1 | Δn | 0.098 |
| VCCP1 | 7.5 | M-12-1-1 | Δε | 4.2 |
| 3CCV | 42 | M-1-1-3 | ε_{⊥} | 2.7 |
| V2CCP1 | 2.5 | M-12-5-1 | γ₁ | 82 |
| 3CCV1 | 12 | M-1-2-3 | GTG | 336 |
| 3CPUQUF | 6.5 | N-1-12 | Flicker | -59.6 |
| 2PGUQUF | 2 | N-1-15 | LTS(-42°C) | <5 |
| 3PGUQUF | 1.5 | N-1-15 | | |
| 4PGUQUF | 1.5 | N-1-15 | | |
| 3CPPC2 | 3 | M-25 | | |
| 2CPPC2 | 3 | M-25 | | |
| 1PGP2V | 3 | M-17-11-1 | | |
| 2PGP2V | 3 | M-17-11-2 | | |
| 3PGP2V | 3 | M-17-11-3 | | |
| Total | 100 | | | |

### Comparative Example 3

The liquid crystal composition of Comparative Example 3 is prepared according to each compound and weight percentage thereof in the liquid crystal composition as listed in Table 15, and the performance tests are carried out by filling the same into the two substrates of a liquid crystal display device.

**Table 15 Formulation and test results for the performance parameters of the liquid crystal composition**

| Code of component | Weight percentage | Code of general formula | Test result of performance parameters | |
|---|---|---|---|---|
| 3CCGUF | 6 | N-2-14 | Cp | 98.5 |
| 3CCQUF | 4 | N-1-1 | Δn | 0.101 |
| VCCP1 | 5.5 | M-12-1-1 | Δε | 5.1 |
| 3CLPCF3 | 3 | N-2-5 | ε_{⊥} | 3 |
| 3CCV | 35 | M-1-1-3 | γ₁ | 86 |
| V2CCP1 | 2.5 | M-12-5-1 | GTG | 352 |
| 3CCV1 | 7.5 | M-1-2-3 | Flicker | -59.05 |
| 3PUQUF | 14.5 | N-1-6 | LTS(-42°C) | <5 |
| 3CPUQUF | 6.5 | N-1-12 | | |
| 3CPPC2 | 4.5 | M-25 | | |
| 2CPPC2 | 4 | M-25 | | |
| 1PGP2V | 3 | M-17-11-1 | | |
| 3PGP2V | 2 | M-17-11-3 | | |
| 3PGUQUF | 2 | N-1-15 | | |
| Total | 100 | | | |

It can be seen from the comparison between Examples 1-11 and Comparative Examples 2-3 of the present application that via the optimization on the structures and contents of compound of general formula I, compound of general formula II and compound of general formula III, the liquid crystal composition of the present invention has an appropriate perpendicular dielectric constant (2.7~3), an appropriate dielectric anisotropy (3.4~5.5), a relatively large optical anisotropy(0.101~0.112), a relatively high cleaning point (100.7~106), a relatively low rotational viscosity (62~72), a shorter gray-to-gray response time (240~275), a relatively good flicker value (-65.45~-62.89), and a relatively long low-temperature storage time (>10).

It can be seen from the above contents that by means of mutual compounding of the specific structures and contents of the compounds, while having a relatively high clearing point, the liquid crystal composition of the present invention has a relatively small rotational viscosity and a relatively large low-temperature response speed (a relatively small GTG value), can be stably stored at -42°C for more than 10 days, and has a relatively good flicker value and a larger phase width to meet display requirements at lower temperatures, so that the liquid crystal display device including the same has a relatively small threshold voltage, a relatively high contrast ratio, a relatively large response speed, and a relatively wide operating temperature range.

The applicant declares that the liquid crystal composition and liquid crystal display device of the present invention are illustrated by the above Examples of the present invention, but the present invention is not limited to the above Examples, that is, it does not mean that the implement of the present invention must rely on the above Examples. It shall be clear to the person skilled in the art that any improvements of the present invention, equivalent replacements of the raw materials of the product of the present invention, the additions of any auxiliary components, and the selection of specific methods or the like all fall into the protection scope and the disclosure scope of the present invention.

### Industrial Applicability

The liquid crystal composition and liquid crystal display device involved in the present invention can be applied to the technical field of liquid crystal materials.

## Claims

1. A liquid crystal composition, **characterized in that**, the liquid crystal composition comprises:
at least one compound of general formula I: 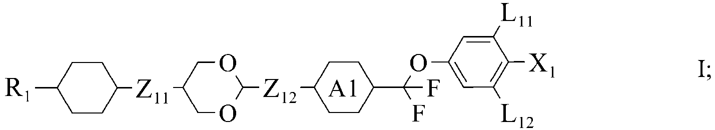
at least one compound of general formula II: 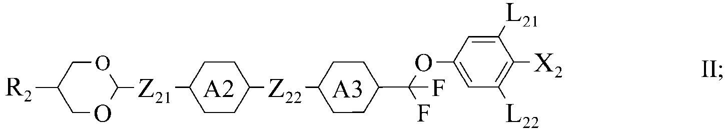 and
at least one compound of general formula III: 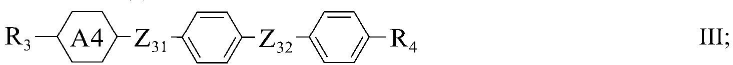
wherein,
R₁ and R₂ each independently represents C₁₋₁₂ linear alkyl, C₃₋₁₂ branched alkyl, 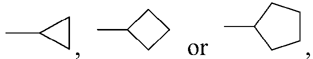 wherein one or at least two nonadjacent -CH₂- in the C₁₋₁₂ linear alkyl, C₃₋₁₂ branched alkyl can each be independently replaced by -CH=CH-, -C≡C-, -O-, -CO-, -CO-O- or -O-CO-, and one or more -H in C₁₋₁₂ linear alkyl, C₃₋₁₂ branched alkyl, 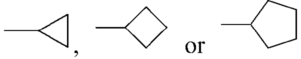 can each be independently substituted by -F or -Cl;
R₃ and R₄ each independently represents C₁₋₁₂ linear alkyl, C₂₋₁₂ linear alkenyl, C₁₋₁₂ linear alkoxy, 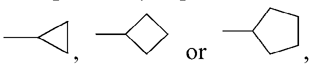 wherein at least one of R₃ and R₄ is C₂₋₁₂ linear alkenyl;
ring 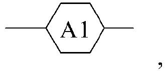 ring 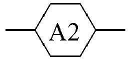 and ring 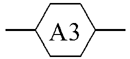 each independently represents 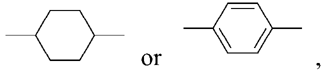 wherein one or more -CH₂-in 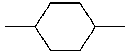 can be replaced by -O-, one or at most two single bonds in the rings can be replaced by double bond, and wherein one or more -H in 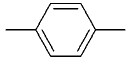 can be substituted by halogen;
ring 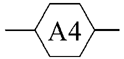 represents 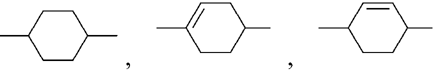 or 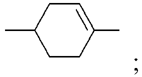
Z₁₁, Z₁₂, Z₂₁, Z₂₂, Z₃₁ and Z₃₂ each independently represents single bond, -CH₂CH₂-, -CF₂CF₂-, -CO-O-, -O-CO-, -O-CO-O-, -C≡C-, -CH=CH-, -CF=CF-, -CH₂O- or -OCH₂-;
L₁₁, L₁₂, L₂₁ and L₂₂ each independently represents -H, halogen, or C₁₋₃ alkyl; and
X₁ and X₂ each independently represents halogen, C₁₋₅ halogenated alkyl, C₁₋₅ halogenated alkoxy, C₂₋₅ halogenated alkenyl, or C₂₋₅ halogenated alkenoxy.

2. The liquid crystal composition according to claim 1, **characterized in that**, the compound of general formula I is selected from a group consisting of the following compounds: 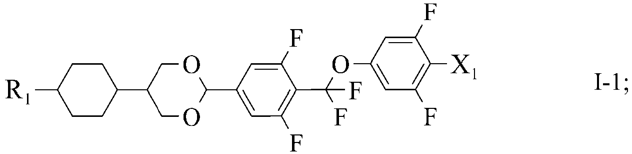 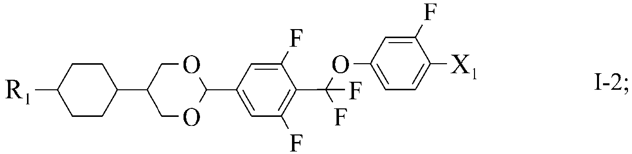 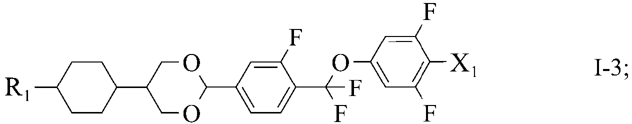 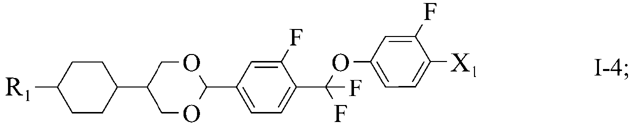 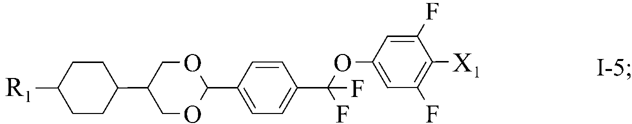 and 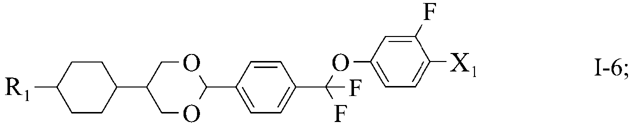
the compound of general formula II is selected from a group consisting of the following compounds: 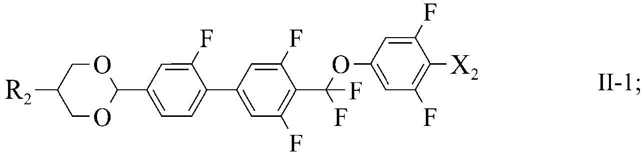 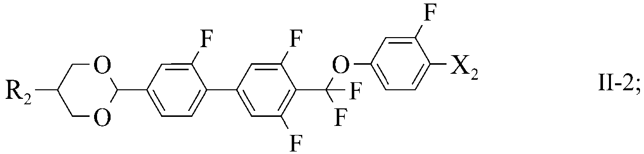 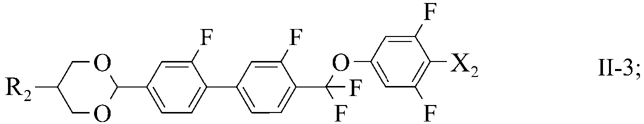 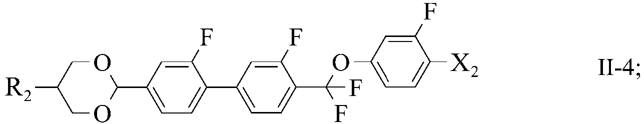 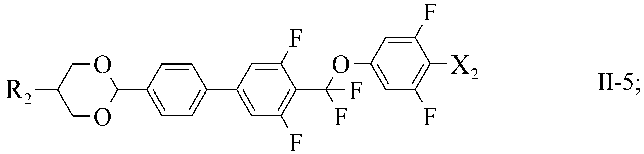 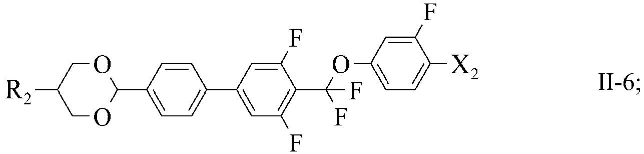 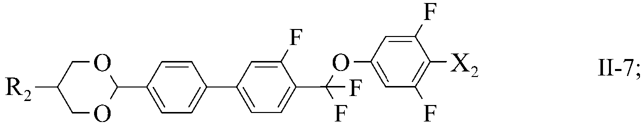 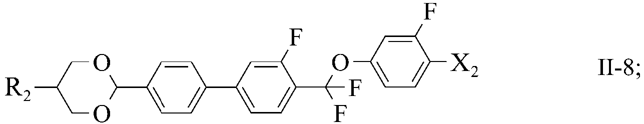 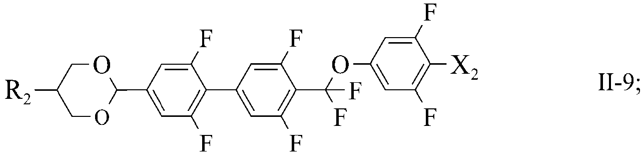 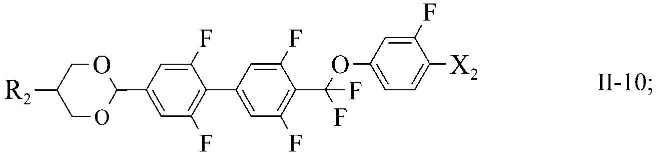 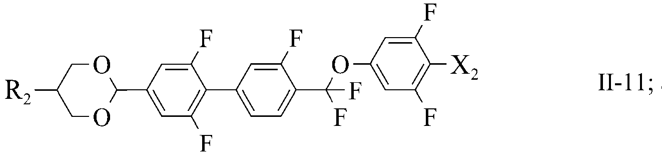 and 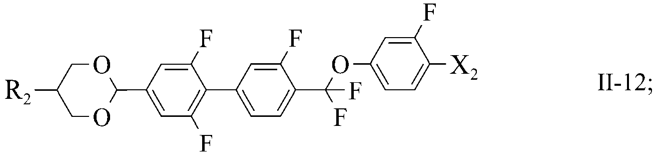
the compound of general formula III is selected from a group consisting of the following compounds: 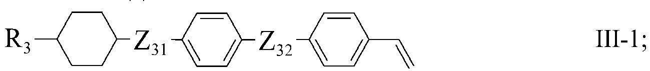 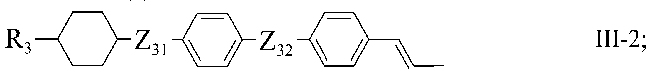 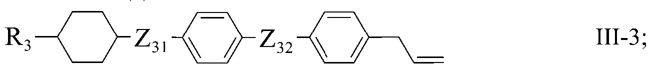 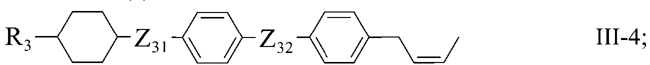 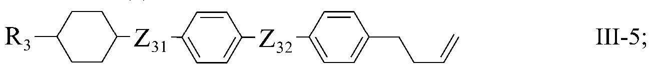 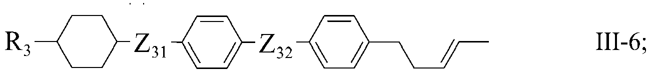 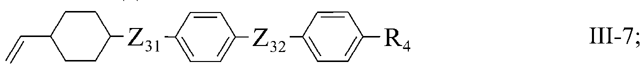 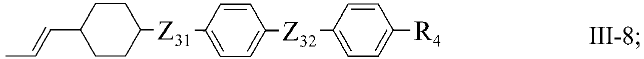 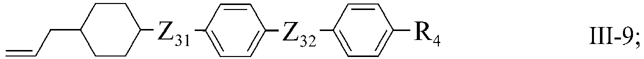 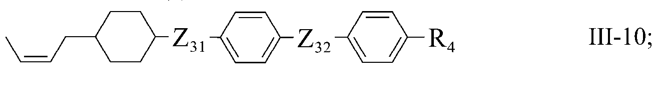 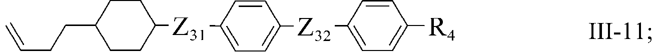 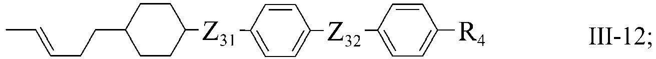 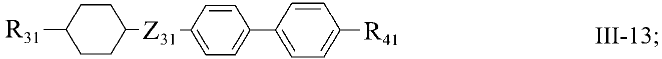 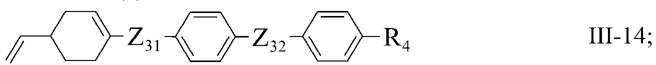 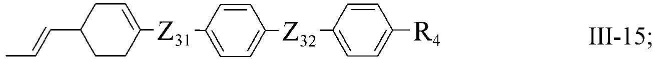 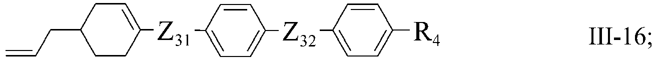 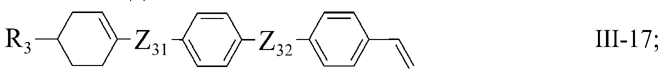 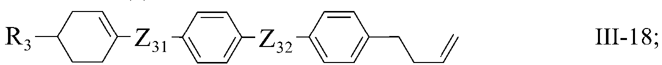 and 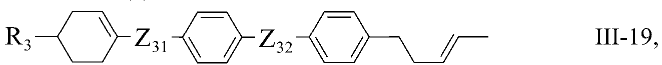
wherein, R₃ and R₄ each independently represents C₁₋₁₂ linear alkyl, C₃₋₁₂ branched alkyl or C₁₋₉ linear alkoxy;
R₃₁ and R₄₁ each independently represents C₂₋₈ linear alkenyl;
Z₃₁ and Z₃₂ each independently represents single bond, -CH₂CH₂- or -CH=CH-.

3. The liquid crystal composition according to claim 1, **characterized in that**, the compound of general formula I provides 0.1%-20% by weight of the liquid crystal composition; the compound of general formula II provides 0.1%-20% by weight of the liquid crystal composition; the compound of general formula III provides 0.1%-30% by weight of the liquid crystal composition.

4. The liquid crystal composition according to claim 1, **characterized in that**, the liquid crystal composition further comprises at least one compound of general formula M: 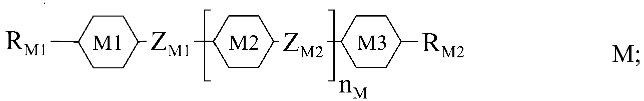
wherein, R_{M1} and R_{M2} each independently represents C₁₋₁₂ linear alkyl, C₂₋₁₂ linear alkenyl, C₁₋₁₂ linear alkoxy, 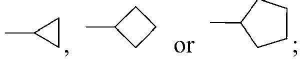
ring 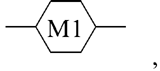 ring 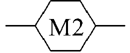 and ring 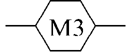 each independently represents 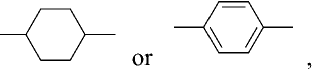 wherein one or more -CH₂-in 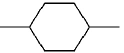 can be replaced by -O-, one or at most two single bonds in the rings can be replaced by double bond, and wherein at most one -H in 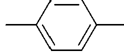 can be substituted by halogen;
Z_{M1} and Z_{M2} each independently represents single bond, -CO-O-, -O-CO-, -CH₂O-, -OCH₂-, -CH₂CH₂-, -O-CO-O-, -C≡C-, -CH=CH- or -(CH₂)₄-;
n_{M} represents 0, 1 or 2, wherein when n_{M} represents 2, ring 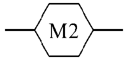 can be the same or different, and Z_{M2} can be the same or different; wherein when n_{M} represents 1, at least one of ring 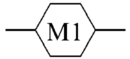 and ring 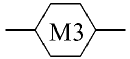 is 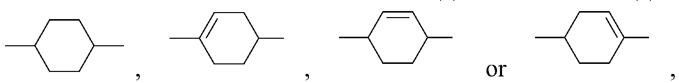 and when ring 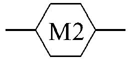 is 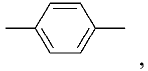 R_{M1} and R_{M2} each independently represents C₁₋₁₂ linear alkyl, C₁₋₁₂ linear alkoxy,

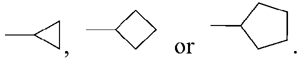

5. The liquid crystal composition according to claim 4, **characterized in that**, the compound of general formula M is selected from a group consisting of the following compounds: 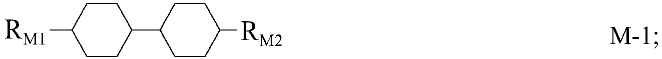 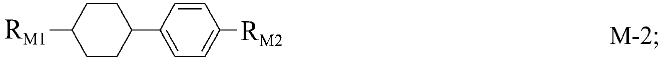 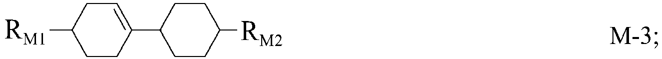 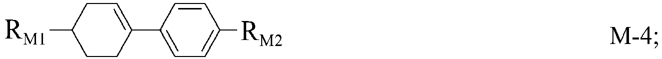 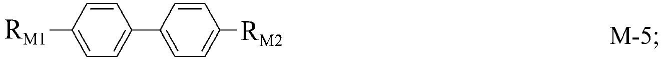 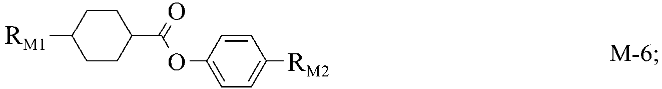 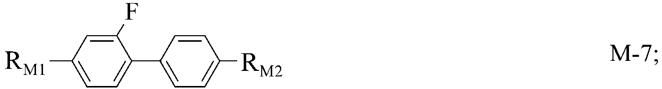 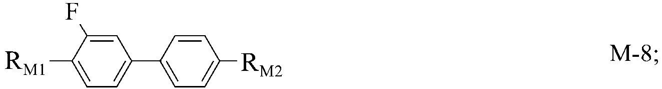 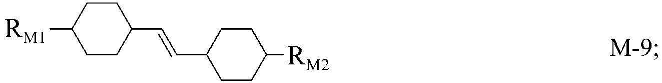 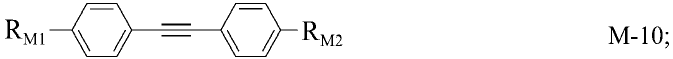 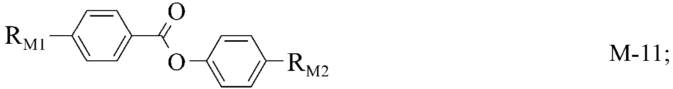 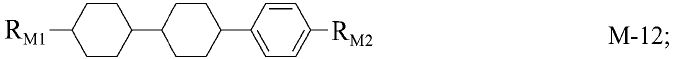 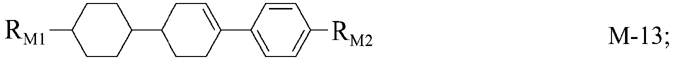 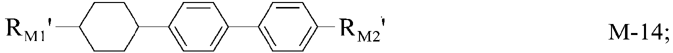 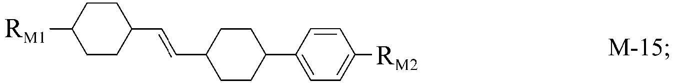 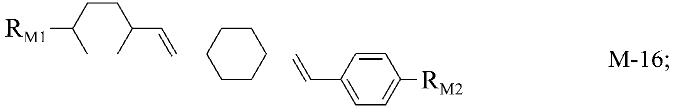 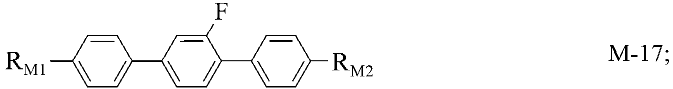 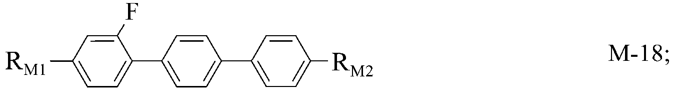 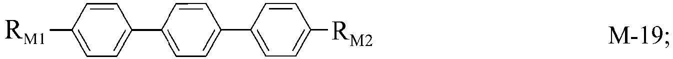 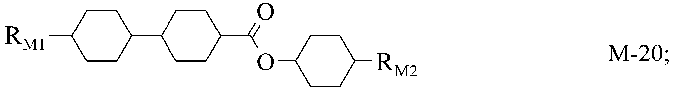 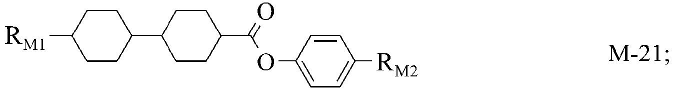 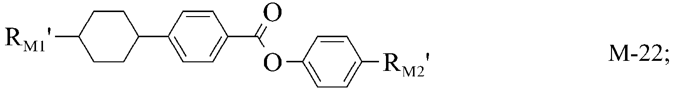 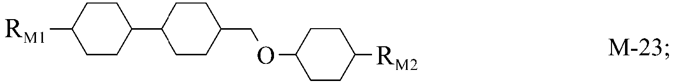 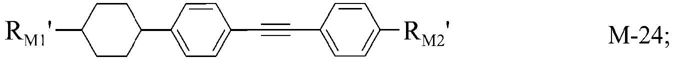 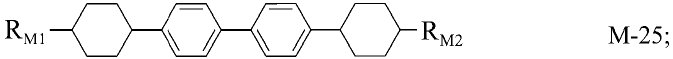 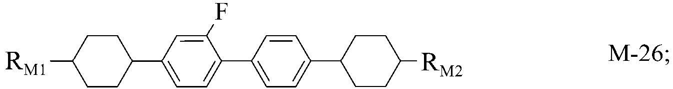 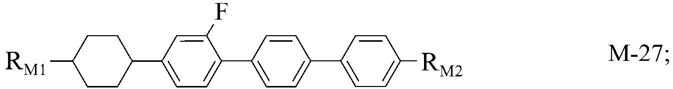 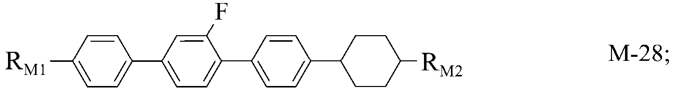 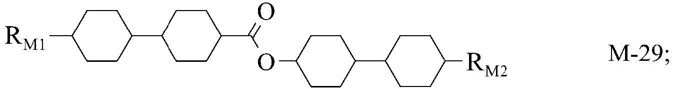 and 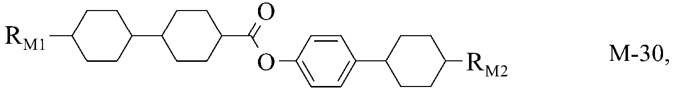
wherein, R_{M1}' and R_{M21}' each independently represents C₁₋₁₂ linear alkyl, C₁₋₁₂ linear alkoxy, 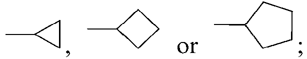
wherein, the compound of general formula M provides 0.1%-90% by weight of the liquid crystal composition.

6. The liquid crystal composition according to claim 1, **characterized in that**, the liquid crystal composition further comprises at least one compound selected from a group consisting of compound of general formula N-1 and compound of general formula N-2: 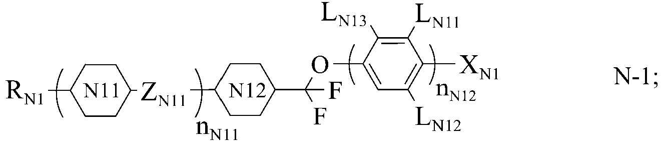 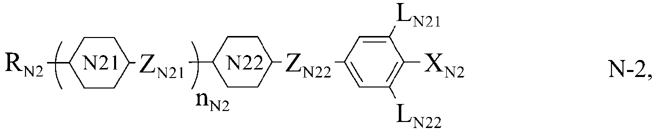
wherein, R_{N1} and R_{N2} each independently represents C₁₋₁₂ linear alkyl, C₃₋₁₂ branched alkyl, 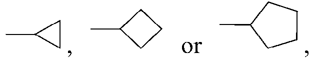 wherein one or more nonadjacent -CH₂- in the C₁₋₁₂ linear alkyl or the C₃₋₁₂ branched alkyl can each be independently replaced by -CH=CH-, -C=C-, -O-, -CO-, -CO-O- or -O-CO-; and one or more -H in the C₁₋₁₂ linear alkyl, C₃₋₁₂ branched alkyl, 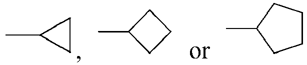 can each be independently substituted by -F or -Cl;
ring 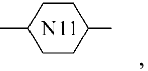 ring 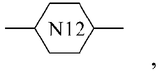 ring 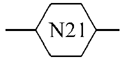 and ring 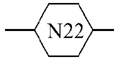 each independently represents 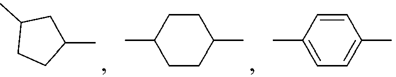 or 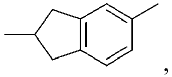 wherein one or more -CH₂- in the 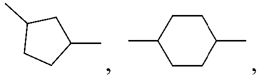 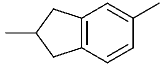 can be replaced by -O-, and one or at most two single bonds in the rings can be replaced by double bond; one or more -H in 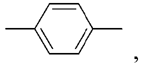 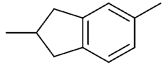 can be substituted by -F, -Cl or -CN, and one or more -CH= in the rings can be replaced by -N=;
Z_{N11}, Z_{N21} and Z_{N22} each independently represents single bond, -CH₂CH₂-, -CF₂CF₂-, -CO-O-, -O-CO-, -O-CO-O-, -CH=CH-, -CF=CF-, -CH₂O- or -OCH₂-;
L_{N11}, L_{N12}, L_{N21} and L_{N22} each independently represents -H, halogen, C₁₋₃ halogenated alkyl, or C₁₋₃ halogenated alkoxy;
L_{N13} represents -H, C₁₋₃ alkyl or alkoxy;
X_{N1} and X_{N2} each independently represents halogen, C₁₋₅ halogenated alkyl, C₁₋₅ halogenated alkoxy, C₂₋₅ halogenated alkenyl, or C₂₋₅ halogenated alkenoxy;
n_{N11} represents 0, 1, 2 or 3, wherein, when n_{N11} represents 2 or 3, ring 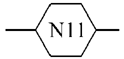 can be the same or different, and Z_{N11} can be the same or different; wherein, when n_{N11} represents 2, 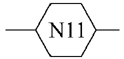 is not 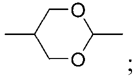
n_{N12} represents 1 or 2, wherein when n_{N12} represents 2, ring 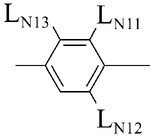 can be the same or different; and
n_{N2} represents 0, 1, 2 or 3, wherein when n_{N2} represents 2 or 3, ring 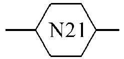 can be the same or different, and Z_{N21} can be the same or different.

7. The liquid crystal composition according to claim 6, **characterized in that**, the compound of general formula N-1 is selected from a group consisting of the following compounds: 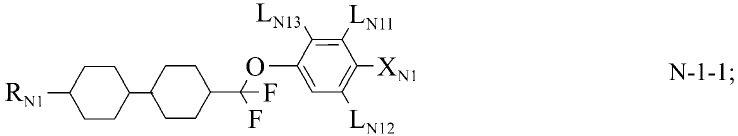 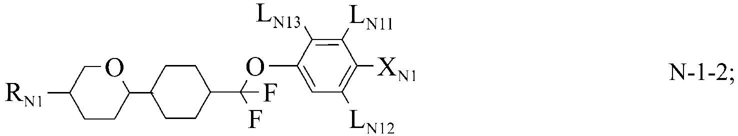 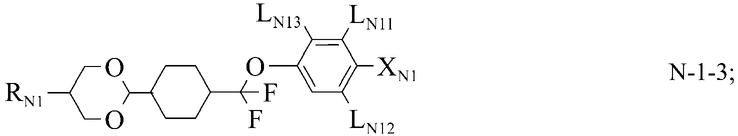 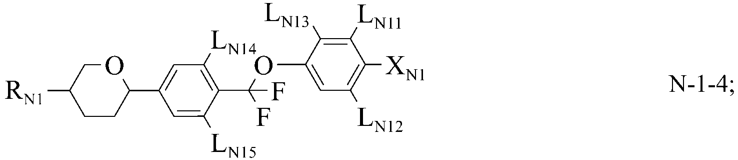 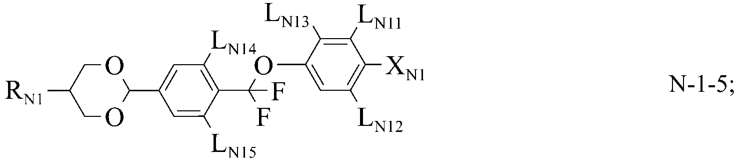 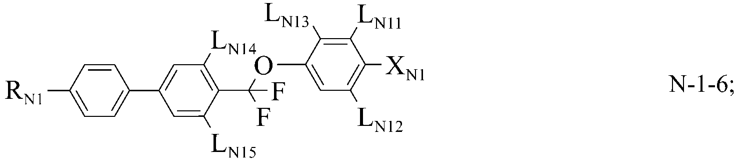 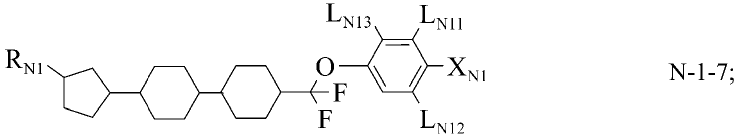 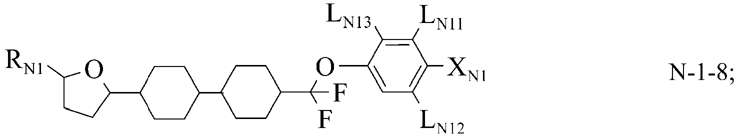 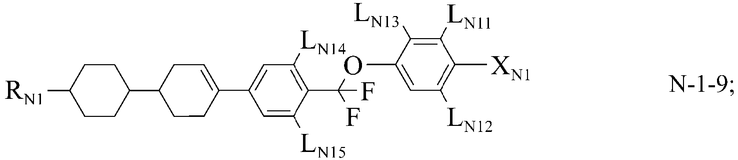 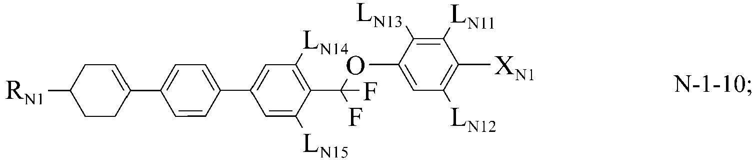 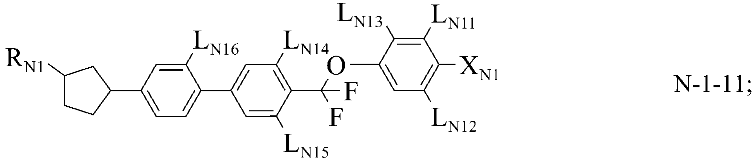 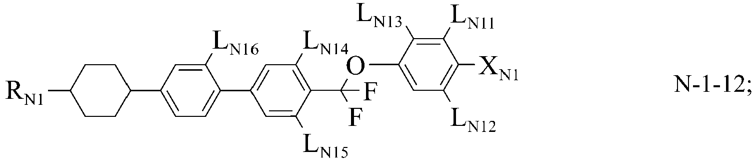 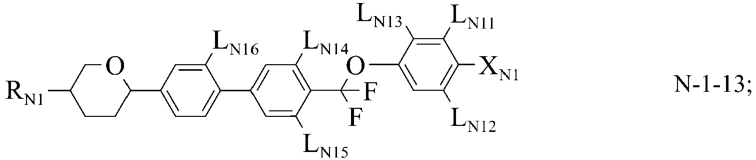 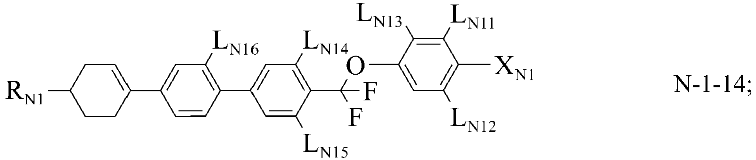 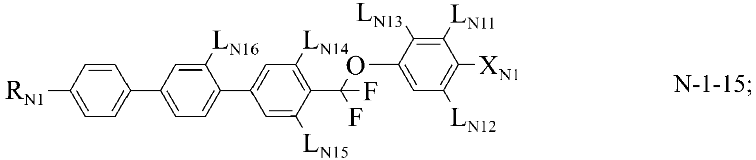 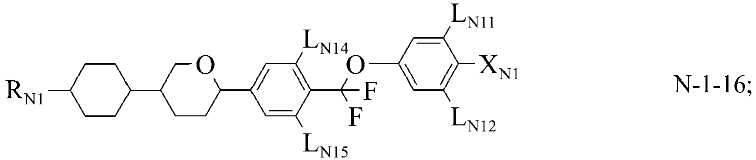 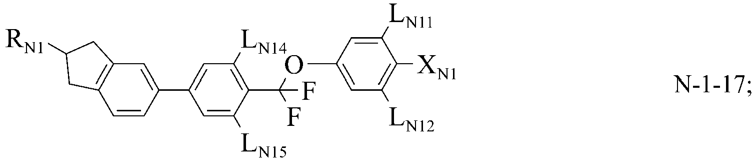 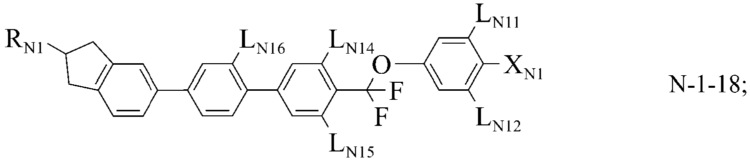 and 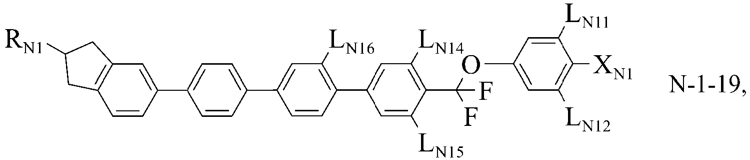
wherein, R_{N1} represents C₁₋₈ linear alkyl, 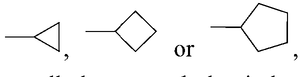 wherein one or more nonadjacent -CH₂- in C₁₋₈ linear alkyl can each be independently replaced by -CH=CH-, -C=C-, -O-, -CO-, -CO-O- or -O-CO-; and one or more -H in these groups can each be independently substituted by -F or -Cl;
L_{N11}, L_{N12}, L_{N14}, L_{N15} and L_{N16} each independently represents -H or -F;
L_{N13} represents -H or -CH₃; and
X_{N1} represents -F, -CF₃ or -OCF₃;
the compound of general formula N-2 is selected from a group consisting of the following compounds: 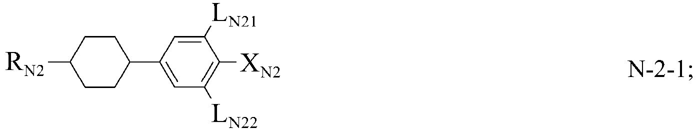 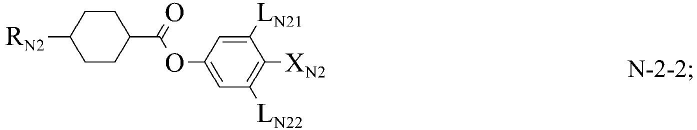 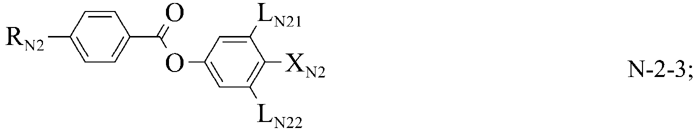 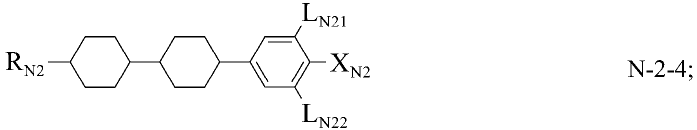 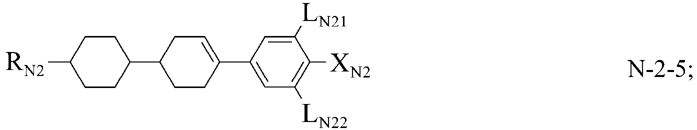 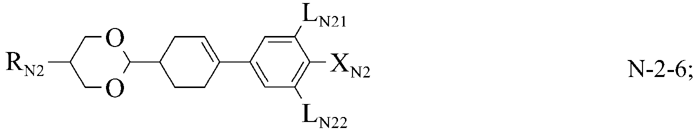 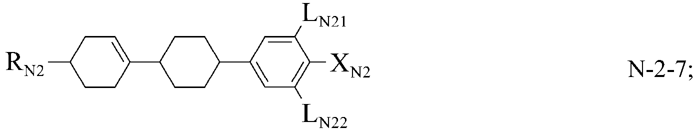 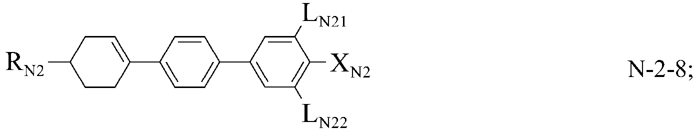 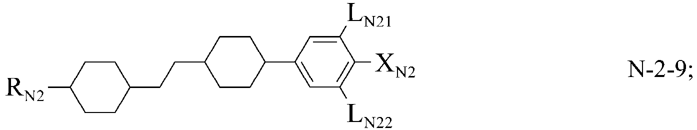 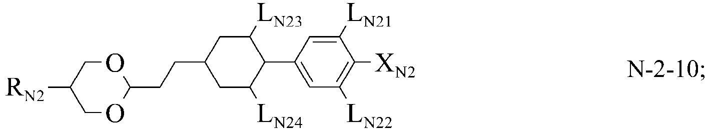 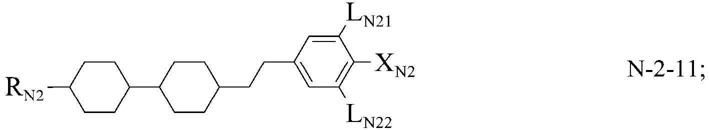 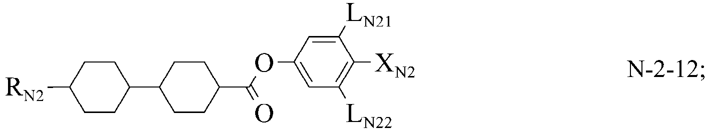 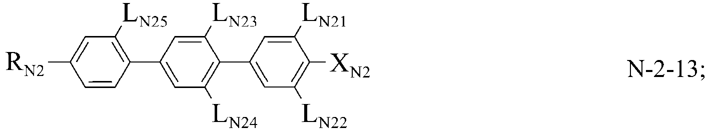 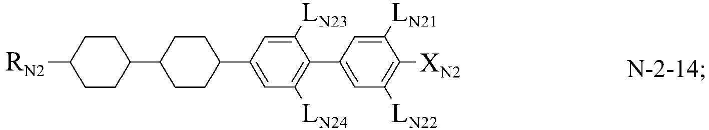 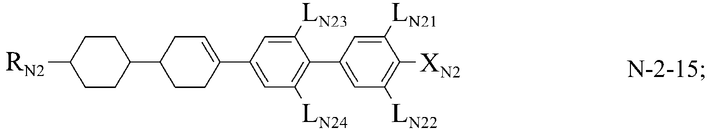 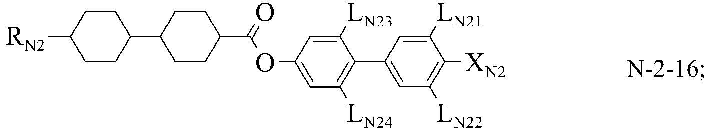 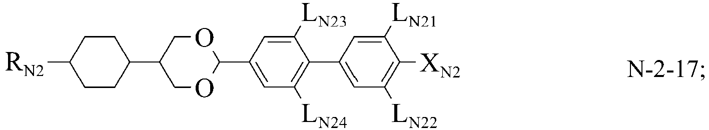 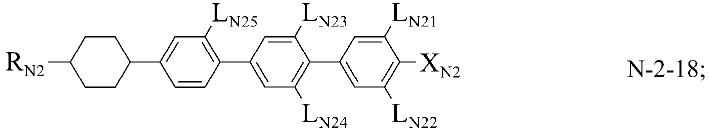 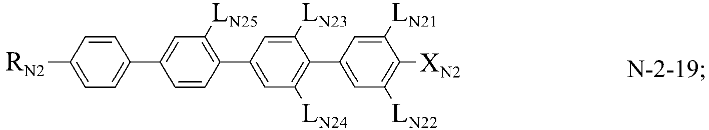 and 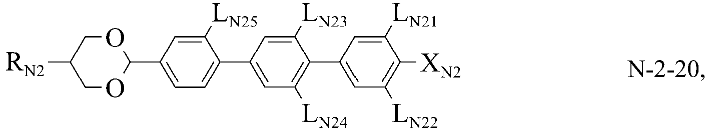
wherein, R_{N2} represents C₁₋₈ linear alkyl, wherein one or more nonadjacent -CH₂- in C₁₋₈ linear alkyl can each be independently replaced by -CH=CH-, -C≡C-, -O-, -CO-, -CO-O- or -O-CO-; and one or more -H in these groups can each be independently substituted by -F or -Cl;
L_{N21}, L_{N22}, L_{N23}, L_{N24} and L_{N25} each independently represents -H or -F; and
X_{N2} represents -F, -CF₃ or -OCF₃;
wherein, the compound selected from the group consisting of compound of general formula N-1 and compound of general formula N-2 provides 0.1%-50% by weight of the liquid crystal composition.

8. The liquid crystal composition according to claim 1, **characterized in that**, the liquid crystal composition further comprises at least one compound of general formula P: 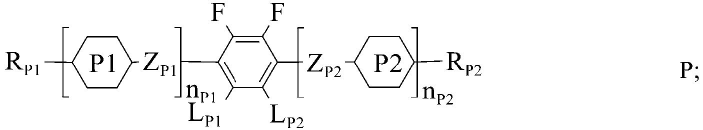
wherein, R_{P1} and R_{P2} each independently represents C₁₋₁₂ linear alkyl, C₃₋₁₂ branched alkyl, 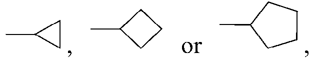 wherein one or more nonadjacent -CH₂- in C₁₋₁₂ linear alkyl or C₃₋₁₂ branched alkyl can each be independently replaced by -CH=CH-, -C=C-, -O-, -CO-, -CO-O- or -O-CO-;
ring 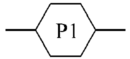 and ring 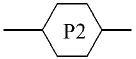 each independently represents 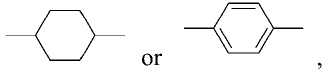 wherein one or -CH₂- in the 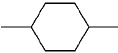 can be replaced by -O-, one or more single bonds in the rings can be replaced by double bond, wherein one or more -H in the 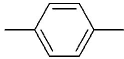 can be substituted by -F, -Cl or -CN, and one or more -CH= in the rings can be replaced by -N=;
Z_{P1} and Z_{P2} each independently represents single bond, -CO-O-, -O-CO-, -CH₂O-, -OCH₂-, -CH=CH-, -C≡C-, -CH₂CH₂-, -CF₂CF₂-, -(CH₂)₄-, -CF₂O- or -OCF₂-;
L_{P1} and L_{P2} each independently represents -H, halogen, or C₁₋₃ alkyl; and
n_{P1} represents 0, 1, 2 or 3, n_{P2} represents 0 or 1, and 0≤n_{P1}+n_{P2}≤3; when n_{P1} represents 2 or 3, ring 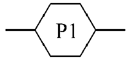 is the same or different, and Z_{P1} is the same or different;
wherein, the compound of general formula P is selected from a group consisting of the following compounds: 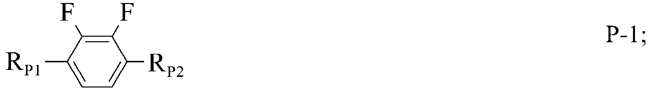 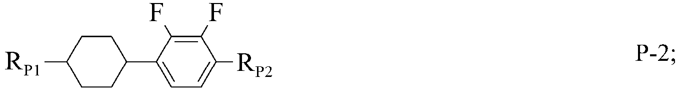 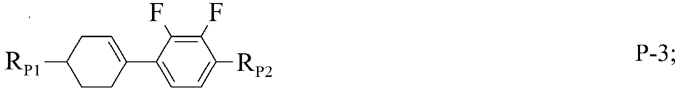 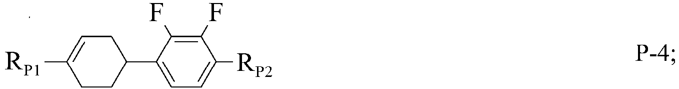 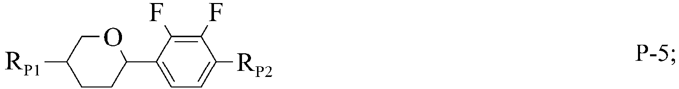 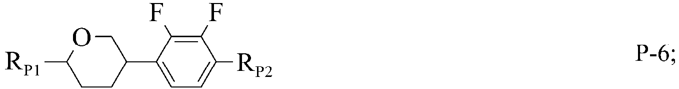 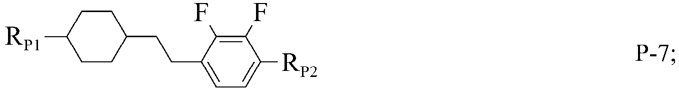 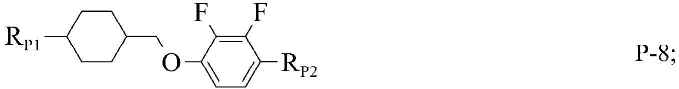 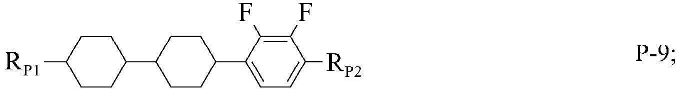 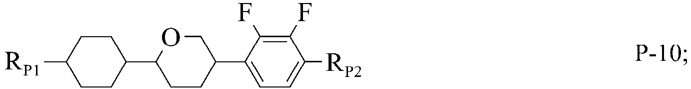 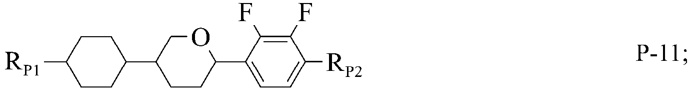 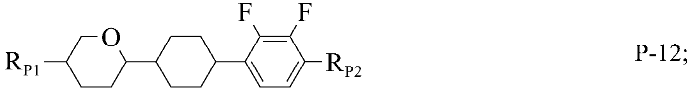 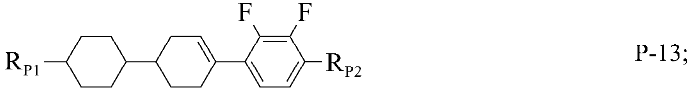 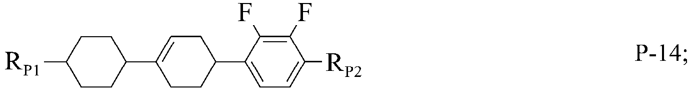 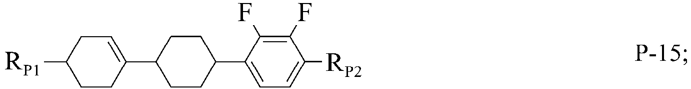 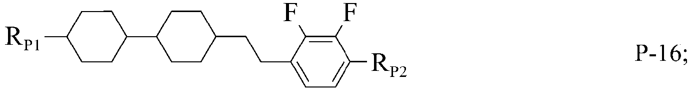 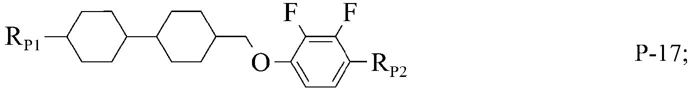 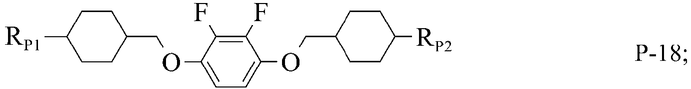 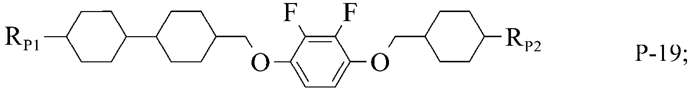 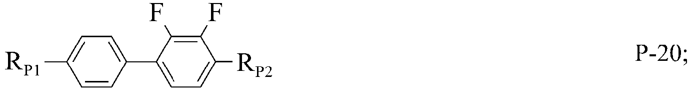 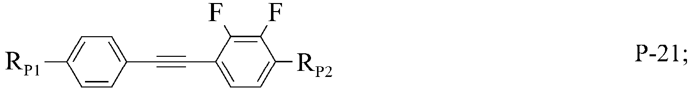 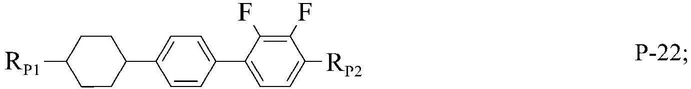 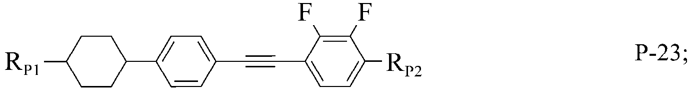 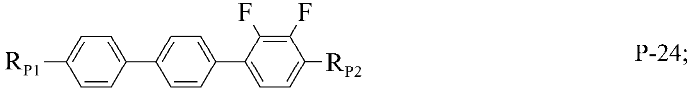 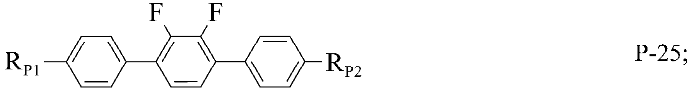 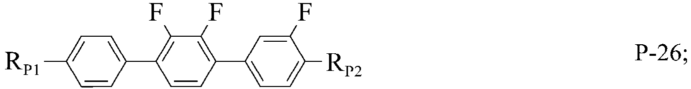 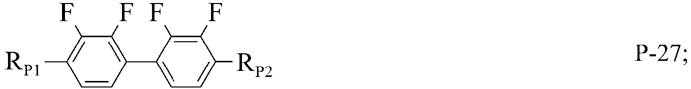 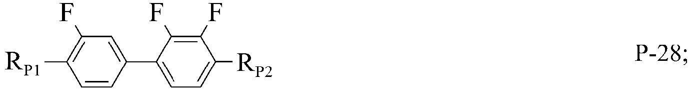 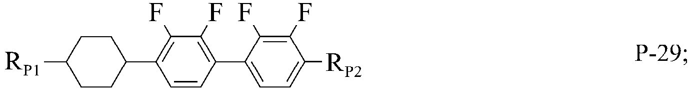 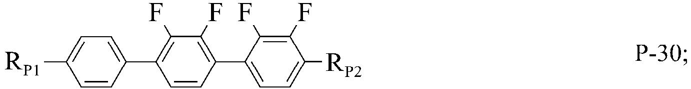 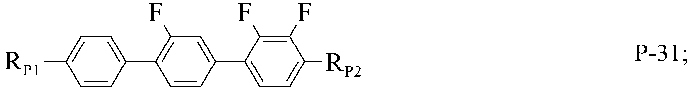 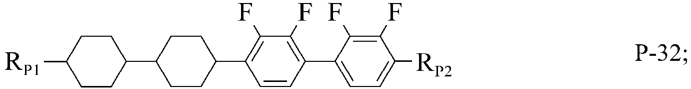 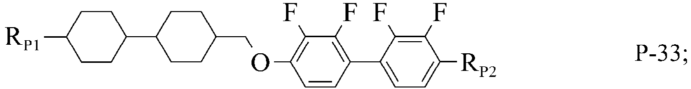 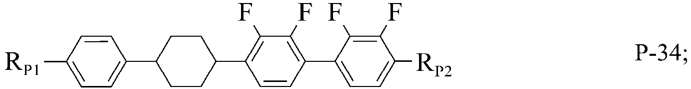 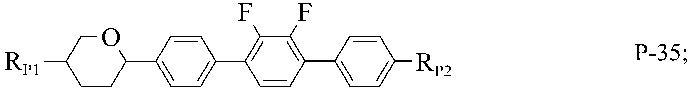 and 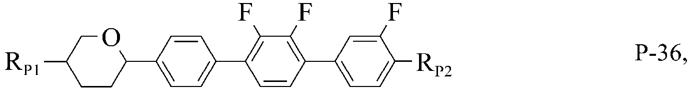
wherein, the compound of general formula P provides 0.1%-20% by weight of the liquid crystal composition.

9. A liquid crystal display device, **characterized in that**, the liquid crystal display device comprises the liquid crystal composition of any one of claims 1-8.

10. Use of the liquid crystal composition of any one of claims 1-8 in a liquid crystal display device, particularly in a vehicle-mounted liquid crystal display device.
